# EUROPEAN PATENT APPLICATION

(11) **EP 1 363 413 A1**
(43) Date of publication of application: **19.11.2003**
(21) Application number: 02768125.3
(22) Date of filing: 27.09.2002
(51) Int. Cl.: H04B 7/26

(54) **RADIO CONTROL APPARATUS, BASE STATION, MOBILE COMMUNICATION METHOD, MOBILE COMMUNICATION PROGRAM, RECORDING MEDIUM CONTAINING THE SAME, AND MOBILE COMMUNICATION SYSTEM**

(30) Priority: 04.10.2001 JP 2001309072
(71) Applicant: NTT DoCoMo, Inc., Tokyo 100-6150 (JP)
(72) Inventor: HAYASHI, Takahiro NTT DoCoMo, Inc., Chiyoda-ku, Tokyo 100-615 (JP); ISHIKAWA, Yoshihiro NTT DoCoMo, Inc., Chiyoda-ku, Tokyo 100-615 (JP); IWAMURA, Mikio NTT DoCoMo, Inc., Chiyoda-ku, Tokyo 100-615 (JP)
(74) Representative: GROSSE BOCKHORNI SCHUMACHER
(86) International application number: JP0210094
(87) International publication number: WO03032527

(57) **Abstract**

A radio control apparatus 2 dynamically determines and controls transmission rates of DSCH for transmission of data signals on the basis of transmission powers of A-DPCH for transmission of control signals. In order to eliminate influence of sudden variation in the radio link condition, the radio control apparatus calculates an average of transmission powers of control signals at predetermined times and dynamically determines and controls the transmission rates of DSCH on the basis of the calculation result. Furthermore, when the transmission powers of the control signals remain at a specific value over a predetermined time period, the radio control apparatus determines that the radio link condition is bad, determines the transmission rate of the data signal to 0 to terminate data transmission, and performs control to switch a mobile terminal 41 to another as a target of transmission of data. The present invention is also applicable to control of transmission rates of HS-PDSCH in HSDPA.

## Description

### Technical Field

The present invention relates to a radio control apparatus, a base station, a mobile communication method, a mobile communication program, a recording medium containing a record of the program, and a mobile communication system.

### Background Art

The recent development of radio communication technologies has invoked use of mobile communication systems permitting fast and highly reliable data transport. Particularly, in the mobile packet communication systems making use of the code division multiplex schemes such as W-CDMA (Wideband-Code Division Multiple Access), CDMA-2000, etc., techniques of using different channels according to characteristics of signals to be transmitted to mobile terminals are adopted as downlink transmission methods. Radio networks (RAN: Radio Access Networks) in such mobile packet communication systems are disclosed, for example, in the following documents of Technical Specifications by the third generation partnership project (3rd Generation Partnership Project; Technical Specification Group Radio Access Network); "Physical channels and mapping of transport channels onto physical channels (FDD) (Release 1999)" 3GPP TS 25.211 V3.11.0 (2002-06), "Multiplexing and channel coding (FDD) (Release 1999)" 3GPP TS 25.212 V3. 10.0 (2002-06), "Spreading and modulation (FDD) (Release 1999)" 3GPP TS 25.213 V3.8.0 (2002-06), "Physical layer procedures (FDD) (Release 1999) 3GPP TS 25.214 V3.10.0 (2002-03), "Physical layer-Measurements (FDD) (Release 1999)" 3GPP TS 25.215 V3.10.0 (2002-03), etc. (http://www.3gpp.org/ftp/Specs/latest/R1999/25_series/2 5211-3b0.zip/, 25212-3a0.zip, 25213-380.zip, 25214-3a0.zip, 25215-3a0.zip, and so on).

In more detail, control signals are transmitted using A-DPCH (Associated Dedicated Physical CHannel) which represents an dedicated channel suitable for fast transmission power control (a channel dedicated to each terminal). In contrast to it, data signals are transmitted by time division multiplex transmission using DSCH (Downlink Shared CHannel) which represents a common channel permitting highly efficient use of radio resources among a plurality of mobile terminals. Effective signal transmission to mutually complement the advantages of the both channels is implemented by such selective control of channels.

However, the above prior art had the following problem. Namely, while DSCH permits the transmission rate to be changed at intervals of a fixed time (e.g., 10 ms) in the standard specifications, no method to implement it has been established; therefore, a fixed transmission rate (e.g., 384 kbps) was set at the time of a start of data communication.

In this case, concerning the control signals using A-DPCH, there arises no problem with the fixed transmission rate, because the transmission power required is small. However, concerning the data signals using DSCH, the transmission power required is large and the transmission rate is set high. As a result, there arose the problem that transmission characteristics heavily degraded because of failure in following the radio link condition varying at high frequency and with time.

In order to solve the above problem, it is also conceivable to preliminarily set the transmission rate at a low level and keep down the required transmission power. In this case, however, while the communication quality is secured, reception of data takes a considerable time and it is thus difficult to provide services at a high satisfaction level to users of mobile terminals.

The present invention has been accomplished in view of the above problem and an object of the invention is to provide a radio control apparatus, a base station, a mobile communication method, a mobile communication program, a recording medium containing a record of the program, and a mobile communication system enabling fast transmission while maintaining the communication quality.

### Disclosure of the Invention

A radio control apparatus according to the present invention is a radio control apparatus for controlling downlink packet communication between mobile terminals and a base station by transmitting control signals with dedicated channels for the respective mobile terminals and by transmitting data signals with a common channel used in a time-shared manner among the mobile terminals, the radio control apparatus comprising: storage means for storing transmission rates of the data signals in correspondence to transmission powers of the control signals; acquiring means for acquiring a transmission power of a control signal transmitted to a specific mobile terminal among the mobile terminals; determining means for determining a transmission rate of a data signal to be transmitted to the specific mobile terminal, on the basis of the transmission power of the control signal acquired by the acquiring means and with reference to information stored in the storage means; and instructing means for instructing the base station to transmit the data signal at the transmission rate of the data signal determined by the determining means.

A base station according to the present invention is a base station comprising: first channel transmitting means for transmitting control signals with dedicated channels for respective mobile terminals; second channel transmitting means for transmitting data signals with a common channel used in a time-shared manner among the mobile terminals; storage means for storing transmission rates of the data signals transmitted from the second channel transmitting means, in correspondence to transmission powers of the control signals; acquiring means for acquiring a transmission power of a control signal transmitted to a specific mobile terminal among the mobile terminals; determining means for determining a transmission rate of a data signal to be transmitted to the specific mobile terminal, on the basis of the transmission power of the control signal acquired by the acquiring means and with reference to information stored in the storage means; and instructing means for instructing the second channel transmitting means to transmit the data signal at the transmission rate of the data signal determined by the determining means.

A mobile communication method according to the present invention is a mobile communication method of performing downlink packet communication between mobile terminals and a base station by transmitting control signals with dedicated channels for the respective mobile terminals and by transmitting data signals with a common channel used in a time-shared manner among the mobile terminals, the mobile communication method comprising: a storage step of storing transmission rates of the data signals in correspondence to transmission powers of the control signals; an acquiring step of acquiring a transmission power of a control signal transmitted to a specific mobile terminal among the mobile terminals; a determining step of determining a transmission rate of a data signal to be transmitted to the specific mobile terminal, on the basis of the transmission rates of the data signals stored in the storage step and the transmission power of the control signal acquired in the acquiring step; and an instructing step of instructing the base station to transmit the data signal at the transmission rate of the data signal determined in the determining step.

Furthermore, a mobile communication program according to the present invention is a mobile communication program which can be read by a computer for controlling downlink packet communication between mobile terminals and a base station by transmitting control signals with dedicated channels for the respective mobile terminals and by transmitting data signals with a common channel used in a time-shared manner among the mobile terminals, the mobile communication program letting the computer execute: a storage process of storing transmission rates of the data signals in correspondence to transmission powers of the control signals; an acquiring process of acquiring a transmission power of a control signal transmitted to a specific mobile terminal among the mobile terminals; a determining process of determining a transmission rate of a data signal to be transmitted to the specific mobile terminal, on the basis of the transmission rates of the data signals stored in the storage process and the transmission power of the control signal acquired in the acquiring process; and an instructing process of instructing the base station to transmit the data signal at the transmission rate of the data signal determined in the determining process.

According to these aspects of the invention, the transmission rates of the data signals transmitted in time division with the common channel to the mobile terminals are dynamically controlled according to the transmission powers of the control signals transmitted with the dedicated channels for the respective mobile terminals, whereby fast transmission can be implemented while maintaining the communication quality of data signals. This decreases the retransmission rate due to transmission error and the interference in other radio links and, as a result, can increase the volume of data transmitted per unit time (throughput).

Preferably, the storage means of the radio control apparatus stores the transmission rates of the data signals so as to decrease the transmission rates of the data signals with increase in the transmission powers of the control signals and so as to increase the transmission rates of the data signals with decrease in the transmission powers of the control signals.

Preferably, the storage step in the mobile communication method is to store the transmission rates of the data signals so as to decrease the transmission rates of the data signals with increase in the transmission powers of the control signals and so as to increase the transmission rates of the data signals with decrease in the transmission powers of the control signals.

Furthermore, preferably, the storage process in the mobile communication program is to store the transmission rates of the data signals so as to decrease the transmission rates of the data signals with increase in the transmission powers of the control signals and so as to increase the transmission rates of the data signals with decrease in the transmission powers of the control signals.

According to these aspects of the invention, the transmission rate of the data signal is decreased in the case of the transmission power of the control signal being high, because the radio link condition is expected to be bad; whereas the transmission rate of the data signal is increased in the case of the transmission power of the control signal being low, because the radio link condition is expected to be good. Accordingly, the data transmission can be performed at the highest transmission rate within the range where the communication quality can be maintained. As a result, increase of throughput becomes much easier.

The radio control apparatus further comprises calculating means for calculating an average over a predetermined time period of transmission powers of the control signal transmitted to the specific mobile terminal, and the determining means determines the transmission rate of the data signal to be transmitted to the specific mobile terminal, on the basis of the average calculated by the calculating means and with reference to the information stored in the storage means.

The mobile communication method further comprises a calculating step of calculating an average over a predetermined time period of transmission powers of the control signal transmitted to the specific mobile terminal, and the determining step is to determine the transmission rate of the data signal to be transmitted to the specific mobile terminal, on the basis of the average calculated in the calculating step and with reference to the information stored in the storage step.

Furthermore, the mobile communication program lets the computer further execute a calculating process of calculating 'an average over a predetermined time period of transmission powers of the control signal transmitted to the specific mobile terminal, and the determining process is to determine the transmission rate of the data signal to be transmitted to the specific mobile terminal, on the basis of the average calculated by the calculating means and with reference to information stored in the storage process.

According to these aspects of the invention, the transmission rate of the data signal is determined on the basis of the average over the predetermined time period of transmission powers of the control signal. This enables the control over the transmission rates of the data signals on the basis of highly accurate transmission powers with minimal influence of variation in the transmission powers due to sudden change in the communication environment. As a result, it becomes feasible to further increase the volume of data transmitted per unit time in channels.

The acquiring means of the radio control apparatus acquires transmission powers of the control signal transmitted to the specific mobile terminal, at regular intervals over a predetermined time period, and when the transmission powers of the control signal acquired by the acquiring means remain at a specific value over the predetermined time period, the determining means determines the transmission rate of the data signal to be transmitted to the specific mobile terminal, to 0.

The acquiring step in the mobile communication method is to acquire transmission powers of the control signal transmitted to the specific mobile terminal, at regular intervals over a predetermined time period, and when the transmission powers of the control signal acquired in the acquiring step remain at a specific value over the predetermined time period, the determining step is to determine the transmission rate of the data signal to be transmitted to the specific mobile terminal, to 0.

Furthermore, the acquiring process in the mobile communication program is to acquire transmission powers of the control signal transmitted to the specific mobile terminal, at regular intervals over a predetermined time period, and when the transmission powers of the control signal acquired in the acquiring process remain at a specific value over the predetermined time period, the determining process is to determine the transmission rate of the data signal to be transmitted to the specific mobile terminal, to 0.

According to these aspects of the invention, when the transmission powers of the control signal transmitted to the specific mobile terminal remain at the specific value over the predetermined time period, the transmission rate of the data signal to be transmitted to the mobile terminal is determined to 0. Namely, when the transmission powers of the control signal remain at the specific value being the upper limit thereof, over the predetermined time period, the radio link condition is bad between the base station and the mobile terminal and the probability of occurrence of transmission error is high; therefore, the transmission of data signals to the mobile terminal is terminated. This can increase the transmission efficiency. In this case, if transmission ranking is preferentially switched to a mobile terminal under a good radio link condition, the data transmission control can be implemented with higher efficiency.

Another base station according to the present invention is a base station comprising: first channel transmitting means for transmitting each of first signals to a plurality of mobile terminals with dedicated channels for the respective mobile terminals while controlling transmission powers of the first signals according to link conditions of the channels; second channel transmitting means for transmitting data signals to the mobile terminals with a common channel used in a time-shared manner among the mobile terminals; acquiring means for acquiring a transmission power of a first signal transmitted to a specific mobile terminal among the mobile terminals by the first channel transmitting means; storage means for storing a correspondence between transmission rates of the data signals and transmission powers of the first signals; determining means for determining a transmission rate of the data signal to be transmitted to the specific mobile terminal, on the basis of the transmission power of the first signal acquired by the acquiring means and with reference to the correspondence stored in the storage means; and instructing means for instructing the second channel transmitting means to perform transmission of the data signal to the specific mobile terminal on the basis of the transmission rate determined by the determining means.

Another radio control apparatus according to the present invention is a radio control apparatus for controlling a base station configured to transmit each of first signals to a plurality of mobile terminals with dedicated channels for the respective mobile terminals while controlling each of transmission powers of the dedicated channels according to link conditions of the channels, and to transmit data signals to the mobile terminals with a common channel used in a time-shared manner among the mobile terminals, the radio control apparatus comprising: acquiring means for acquiring a transmission power of a first signal transmitted from the base station to a specific mobile terminal among the mobile terminals; storage means for storing a correspondence between transmission rates of the data signals and transmission powers of the first signals; determining means for determining a transmission rate of the data signal to be transmitted to the specific mobile terminal, on the basis of the transmission power of the first signal acquired by the acquiring means and with reference to the correspondence stored in the storage means; and instructing means for instructing the base station to perform transmission of the data signal to the specific mobile terminal on the basis of the transmission rate determined by the determining means.

Another mobile communication method according to the present invention is a mobile communication method of performing mobile communication while controlling a base station comprising: first channel transmitting means for transmitting each of first signals to a plurality of mobile terminals with dedicated channels for the respective mobile terminals while controlling each of transmission powers of the first signals according to link conditions of the channels; and second channel transmitting means for transmitting data signals to the mobile terminals with a common channel used in a time-shared manner among the mobile terminals, the mobile communication method comprising: an acquiring step of acquiring a transmission power of a first signal transmitted to a specific mobile terminal among the mobile terminals by the first channel transmitting means; a storage step of storing a correspondence between transmission rates of the data signals and transmission powers of the first signals; a determining step of determining a transmission rate of the data signal to be transmitted to the specific mobile terminal, on the basis of the transmission power of the first signal acquired in the acquiring step and with reference to the correspondence stored in the storage step; and an instructing step of instructing the second channel transmitting means to perform transmission of the data signal to the specific mobile terminal on the basis of the transmission rate determined in the determining step.

Another mobile communication program according to the present invention is a mobile communication program of controlling a base station comprising: first channel transmitting means for transmitting each of first signals to a plurality of mobile terminals with dedicated channels for the respective mobile terminals while controlling each of transmission powers of the first signals according to link conditions of the channels; and second channel transmitting means for transmitting data signals to the mobile terminals with a common channel used in a time-shared manner among the mobile terminals, the mobile communication program letting a computer execute: an acquiring process of acquiring a transmission power of a first signal transmitted to a specific mobile terminal among the plurality of mobile terminals by the first channel transmitting means; a storage process of storing a correspondence between transmission rates of the data signals and transmission powers of the first signals; a determining process of determining a transmission rate of the data signal to be transmitted to the specific mobile terminal, on the basis of the transmission power of the first signal acquired in the acquiring process and with reference to the correspondence stored in the storage process; and an instructing process of instructing the second channel transmitting process to perform transmission of the data signal to the specific mobile terminal on the basis of the transmission rate determined in the determining process.

According to these aspects of the invention, the transmission rates of the data signals transmitted in time division with the common channel to the mobile terminals are dynamically controlled according to the transmission powers of the first signals which are transmitted to the respective mobile terminals while the transmission powers each are controlled according to the conditions of radio links, whereby the transmission rates of data signals can be optimized according to the conditions of radio links and whereby fast transmission can be implemented while maintaining the communication quality of data signals. This makes it feasible to decrease the retransmission rate due to transmission error and the interference in the other radio links and, as a result, to increase the volume of data transmitted per unit time (throughput).

In the above base station, preferably, the storage means stores the correspondence so as to decrease the transmission rates of the data signals with increase in the transmission powers of the first signals and so as to increase the transmission rates of the data signals with decrease in the transmission powers of the first signals.

In the above mobile communication method, preferably, the storage step is to store the correspondence so as to decrease the transmission rates of the data signals with increase in the transmission powers of the first signals and so as to increase the transmission rates of the data signals with decrease in the transmission powers of the first signals.

In the above mobile communication program, preferably, the storage process is to store the correspondence so as to decrease the transmission rates of the data signals with increase in the transmission powers of the first signals and so as to increase the transmission rates of the data signals with decrease in the transmission powers of the first signals.

According to these aspects of the invention, the transmission rate of the data signal is decreased in the case of the transmission power of the first signal being high, i.e., when the radio link condition is expected to be bad; whereas the transmission rate of the data signal is increased in the case of the transmission power of the control signal being low, i.e., when the radio link condition is expected to be good. Accordingly, the data transmission can be performed at the highest transmission rate within the range where the communication quality can be maintained. As a result, increase of throughput becomes much easier.

In the above base station, preferably, the acquiring means acquires each of transmission powers of first signals transmitted at mutually different times to the specific mobile terminal by the first channel transmitting means, the base station further comprises calculating means for calculating an average of the transmission powers of the first signals, and the determining means determines the transmission rate of the data signal to be transmitted to the specific mobile terminal, on the basis of the average calculated by the calculating means and with reference to the information stored in the storage means.

In the above mobile communication method, preferably, the acquiring step is to acquire each of transmission powers of first signals transmitted at mutually different times to the specific mobile terminal by the first channel transmitting means, the mobile communication method further comprises a calculating step of calculating an average of the transmission powers of the first signals acquired, and the determining step is to determine the transmission rate of the data signal to be transmitted to the specific mobile terminal, on the basis of the average calculated in the calculating step and with reference to the correspondence stored in the storage step.

In the above mobile communication program, preferably, the acquiring process is to acquire each of transmission powers of first signals transmitted at mutually different times to the specific mobile terminal by the first channel transmitting means, the mobile communication program further comprises a calculating process of calculating an average of the transmission powers of the first signals acquired, and the determining process is to determine the transmission rate of the data signal to be transmitted to the specific mobile terminal, on the basis of the average calculated in the calculating process and with reference to the correspondence stored in the storage process.

According to these aspects of the invention, the transmission rate of the data signal is determined on the basis of the average over the predetermined time period of transmission powers of the first signals. This enables the control over the transmission rates of the data signals on the basis of highly accurate transmission powers with minimal influence of variation in the transmission powers due to sudden change in the communication environment. As a result, it becomes feasible to further increase the volume of data transmitted per unit time in channels.

In the above base station herein, preferably, the acquiring means acquires each of transmission powers of first signals transmitted at mutually different times to the specific mobile terminal by the first channel transmitting means, and when the transmission powers of the first signals acquired by the acquiring means remain at a specific value over a predetermined time period, the determining means determines the transmission rate of the data signal to be transmitted to the specific mobile terminal, to 0.

In the above mobile communication method, preferably, the acquiring means acquires each of transmission powers of first signals transmitted at mutually different times to the specific mobile terminal by the first channel transmitting means, and when the transmission powers of the first signals acquired in the acquiring step remain at a specific value over a predetermined time period, the determining step is to determine the transmission rate of the data signal to be transmitted to the specific mobile terminal, to 0.

In the above mobile communication program, preferably, the acquiring process is to acquire each of transmission powers of first signals transmitted at mutually different times to the specific mobile terminal by the first channel transmitting means, and when the transmission powers of the first signals acquired in the acquiring process remain at a specific value over a predetermined time period, the determining process is to determine the transmission rate of the data signal to be transmitted to the specific mobile terminal, to 0.

According to these aspects of the invention, when the transmission powers of the first signals transmitted to the specific mobile terminal remain at the specific value over the predetermined time period, the transmission rate of the data signal to be transmitted to the mobile terminal is determined to 0. Namely, when the transmission powers of the first signals remain at the specific value being the upper limit thereof, over the predetermined time period, the radio link condition is bad between the base station and the mobile terminal and the probability of occurrence of transmission error is high; therefore, the transmission of data signals to the mobile terminal is terminated. This can increase the transmission efficiency. In this case, if transmission ranking is preferentially switched to a mobile terminal under a good radio link condition, the data transmission control can be implemented with higher efficiency.

By selling and distributing recording media containing a record of the above mobile communication program singly or as attachment products, the mobile communication technology according to the present invention can be broadly and inexpensively carried out.

Furthermore, the invention may also be applied to construction of a mobile communication system comprising the aforementioned radio control apparatus; and a base station for transmitting a data signal to a mobile terminal at a transmission rate indicated by the instructing means of the radio control apparatus.

### Brief Description of the Drawings

Fig. 1 is a schematic diagram showing an overall configuration example of the mobile communication system in the first to third embodiments of the present invention.
Fig. 2 is a conceptual diagram for explaining the functional configuration and operation of the mobile communication system in the first embodiment.
Fig. 3 is a diagram showing the control flow in the mobile communication system of Fig. 2.
Fig. 4 is a conceptual diagram for explaining the functional configuration and operation of the mobile communication system in the second embodiment.
Fig. 5 is a diagram showing the control flow in the mobile communication system of Fig. 4.
Fig. 6 is a conceptual diagram for explaining the functional configuration and operation of the mobile communication system in the third embodiment.
Fig. 7 is a diagram showing the control flow in the mobile communication system of Fig. 6.
Fig. 8 is a schematic diagram showing an overall configuration example of the mobile communication system in the fourth to sixth embodiments of the present invention.
Fig. 9 is a conceptual diagram for explaining the functional configuration and operation of the mobile communication system in the fourth embodiment.
Fig. 10 is a diagram showing the control flow in the mobile communication system of Fig. 9.
Fig. 11 is a conceptual diagram for explaining the functional configuration and operation of the mobile communication system in the fifth embodiment.
Fig. 12 is a diagram showing the control flow in the mobile communication system of Fig. 11.
Fig. 13 is a conceptual diagram for explaining the functional configuration and operation of the mobile communication system in the sixth embodiment.
Fig. 14 is a diagram showing the control flow in the mobile communication system of Fig. 13.
Fig. 15 is a schematic diagram showing an overall configuration example of the mobile communication system in the seventh embodiment of the present invention.
Fig. 16 is a conceptual diagram for explaining the functional configuration and operation of the mobile communication system in the seventh embodiment.
Fig. 17 is a schematic diagram showing an overall configuration example of the mobile communication system in the eighth embodiment of the present invention.
Fig. 18 is a conceptual diagram for explaining the functional configuration and operation of the mobile communication system in the eighth embodiment.
Fig. 19 is a configuration diagram of a recording medium.
Fig. 20 is a block diagram showing a configuration of a computer.
Fig. 21 is a perspective view of a computer.

### Best Mode for Carrying out the Invention

### (First Embodiment)

The first embodiment of the present invention will be described below in detail with reference to the accompanying drawings.

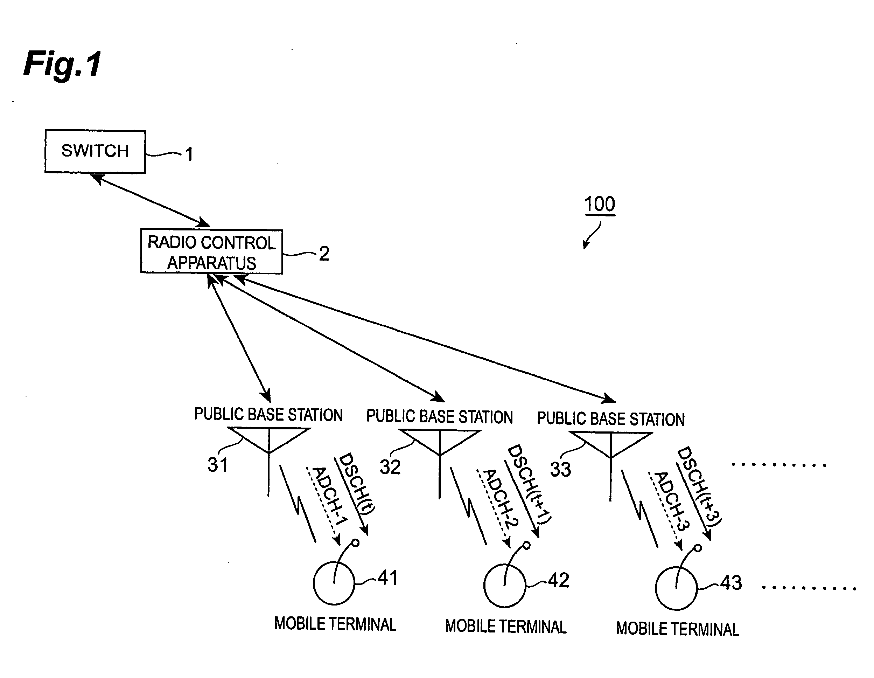

First, the configuration will be described. Fig. 1 is a schematic diagram showing an overall configuration example of mobile communication system 100 in the present embodiment. As shown in Fig. 1, the mobile communication system 100 is comprised of a switching unit 1 functioning as a relay center for public base stations, a radio control apparatus 2 for totally controlling packet communication between public base stations and mobile terminals, public base stations 31, 32, 33 configured to implement direct radio communication with mobile terminals in predetermined communication areas, and mobile terminals 41, 42, 43 carried and used by users, which are constructed in stages and which are connected so as to be bidirectionally communicable.

The description below is based on the premise that the mobile communication system 100 is supposed to transmit a plurality of signals with mutually different characteristics in downward radio links from the public base stations to the mobile terminals (which will be referred to hereinafter as "downlinks") and uses two types of channels. Namely, for transmitting control signals of relatively small required transmission power, channels dedicatedly assigned to the respective mobile terminals (hereinafter referred to as "down A-DPCH") are used. In contrast to it, for transmitting data signals of large required transmission power and high required transmission rate, a common channel to a plurality of mobile terminals (hereinafter referred to as "DSCH") is used in a time-shared manner.

Since the volume of data transmitted is lower in uplinks than in downlinks, the possibility of depletion of code resources is extremely low in uplinks. Therefore, the need for use of a shared channel is not substantial, and each mobile terminal transmits the control and data signals multiplexed on up A-DPCH of one channel.

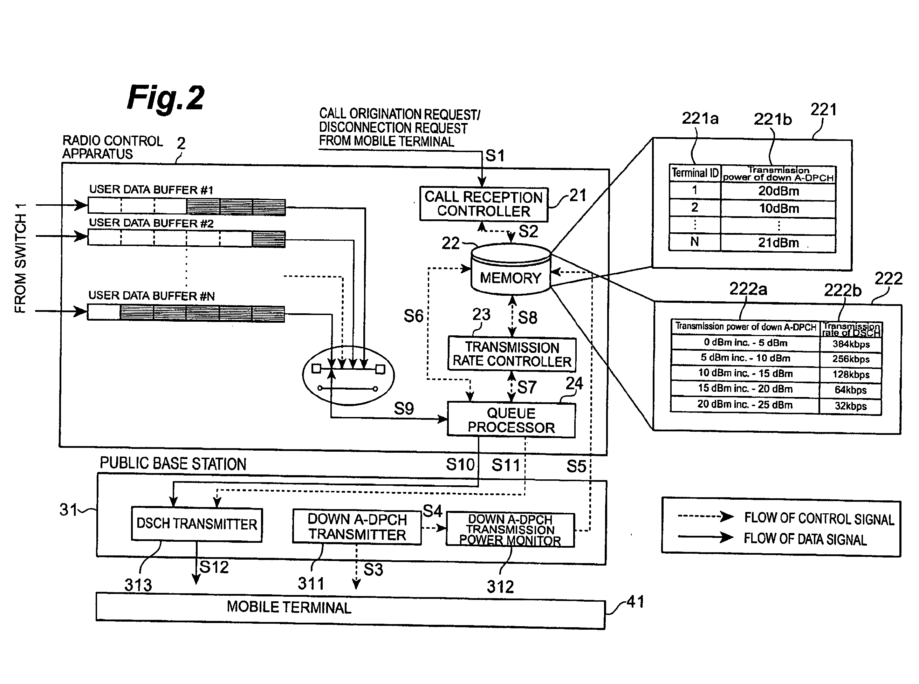

The internal configuration of the radio control apparatus 2 will be described below in detail with reference to Fig. 2. Fig. 2 is a block diagram showing the functional configuration of the radio control apparatus 2. As shown in Fig. 2, the radio control apparatus 2 is comprised of a call reception controller 21, a memory 22, a transmission rate controller 23 (corresponding to the acquiring means and the determining means), and a queue processor 24 (corresponding to the instructing means), which are connected through a bus. Each of the components will be detailed below.

The call reception controller 21 monitors a call origination request and a disconnection request from one of mobile terminals 41, 42, 43,... and determines whether reception thereof should be accepted. When the reception is accepted, a transmission power storage 221 is formed as an area for storage of a terminal ID and a transmission power of down A-DPCH inside the memory 22 described below.

The memory 22 is comprised of a transmission power storage 221 and a transmission rate storage 222. An example of storage of data inside the storages will be described below in detail. First, the transmission power storage 221 has at least a terminal ID storage area 221a and a transmission power storage area 221b inside. The terminal ID storage area 221a stores as "terminal IDs" numerical data (e.g., "1," "2,"..., "N") being terminal identification information uniquely assigned in order to identify the mobile terminals, and the transmission power storage area 221b updatably stores as "transmission powers of down A-DPCHs" numerical data (e.g., "20," "10,"..., "21") indicating transmission powers (in units of dBm) in down A-DPCHs for transmission of control signals.

Next, the transmission rate storage 222 (corresponding to the storage means) has at least a transmission power storage area 222a and a transmission rate storage area 222b inside. The transmission power storage area 222a updatably stores as "transmission powers of down A-DPCHs" numerical data (e.g., "between 0 inclusive and 5," "between 5 inclusive and 10," "between 10 inclusive and 15," "between 15 inclusive and 20," "between 20 inclusive and 25") indicating ranges of transmission powers (in units of dBm) in down A-DPCHs. The transmission rate storage area 222b stores as "transmission rates" numerical data (e.g., "384," "256," "128," "64," "32") indicating transmission rates (in units of kbps) of data signals in DSCH.

The transmission rate controller 23 acquires a transmission power of a down A-DPCH from the transmission power storage 221 and determines a transmission rate of the DSCH on the basis of the correspondence between transmission powers and transmission rates stored in the transmission rate storage 222. Then the transmission rate controller 23 instructs the public base station 31, 32, or 33 via the queue processor 24 described below to transmit data signals at the transmission rate thus determined.

The queue processor 24 acquires the transmission rate of DSCH from the transmission rate controller 23 and instructs the public base station 31 to implement data transmission at the transmission rate thus acquired. At the same time, the queue processor 24 indicates an offset value to be added to the transmission power of DSCH, to the public base station 31.

The public base station 31 is comprised of at least a down A-DPCH transmitter 311 for transmitting signals with a down A-DPCH as a transmission channel, a down A-DPCH transmission power monitor 312 for regularly monitoring the transmission power of the down A-DPCH, and a DSCH transmitter 313 for transmitting signals with the DSCH used in a time-shared manner.

The down A-DPCH transmitter 311 transmits a control signal to preliminarily notify the mobile terminal 41 that data signals will be transmitted with the down A-DPCH. Since the control signal is transmitted prior to data transport, the mobile terminal 41 can recognize the fact before reception of the data signals. This permits the public base station 31 to freely switch a mobile terminal as a receiver of data to another. A fixed rate defined by a telecommunications carrier or by a standardization organization is used as a transmission rate of the control signal.

The down A-DPCH transmission power monitor 312 regularly monitors the transmission power of the down A-DPCH between the down A-DPCH transmitter 311 and the mobile terminal 41, 42, 43... Then it records the monitoring result in the transmission power storage area 221b corresponding to the terminal ID, formed inside the transmission power storage 221 of the radio control apparatus 2. Since the numerical data indicating the transmission power of the down A-DPCH is constantly updated at the same time as the monitoring, the up-to-date transmission power is always recorded for every mobile terminal in the transmission power storage area 221b.

The DSCH transmitter 313 establishes the DSCH between itself and the mobile terminal only when the down A-DPCH transmitter 311 transmits the control signal, and transmits the data signals with the DSCH. The details will be presented later, but the transmission rate of the data signals can be changed at intervals of a predetermined time (e.g., 10 ms) in the standard specifications and is variably determined. The transmission power of the DSCH is set by adding the offset value indicated by the queue processor 24, to the transmission power of the down A-DPCH. Therefore, for example, in the case where the transmission power of the down A-DPCH is 22 dBm and the offset value is 10 dBm, the transmission power of the DSCH is set at 32 dBm.

The mobile terminal 41 is a known cellular phone with a function of receiving at least control signals and data signals, and receives the control signal from the down A-DPCH transmitter 311 of the public base station 31. The mobile terminal 41 initiates reception of data signals from the DSCH transmitter 313 only when it preliminarily receives the notification that the data signals will be transmitted, through the control signal.

The above described the configuration of each terminal equipment constituting the mobile communication system 100 according to the present invention, and it is noted that the major configurations of the public base stations 32, 33,..., and the mobile terminals 42, 43,... illustrated are the same as those of the public base station 31 and the mobile terminal 41 detailed above and the illustration and detailed description of their configurations are thus omitted. Namely, the public base station 32 is comprised of the down A-DPCH transmitter 311, down A-DPCH transmission power monitor 312, and DSCH transmitter 313.

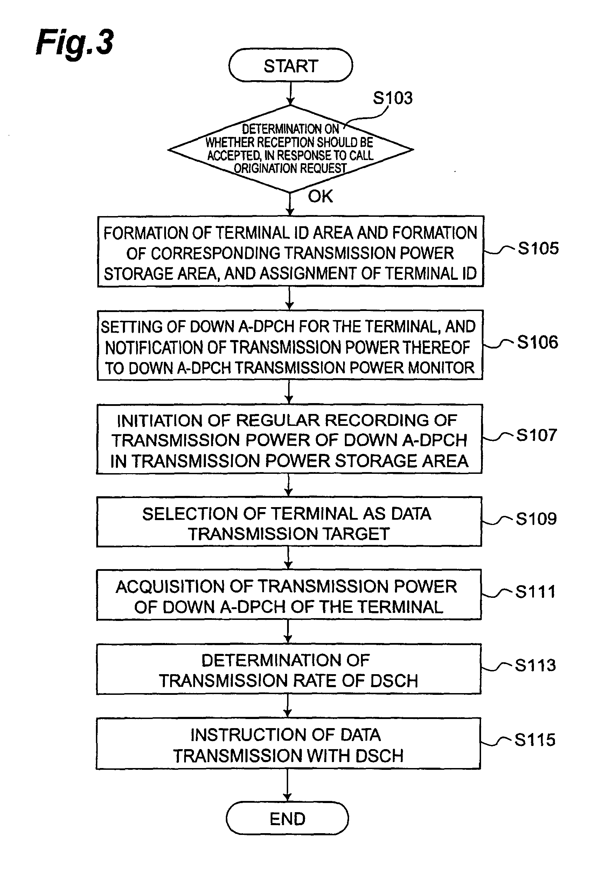

The operation in the present embodiment will be described below with reference to Figs. 2 and 3. The description below will focus on a particular case where the mobile terminal 41 existing in the communication area of the public base station 31 sends a call origination request and will illustratively detail control of the transmission rate between the public base station 31 and the mobile terminal 41, and it is a matter of course that the present invention is by no means intended to be limited to the transmission rate control technology between these devices. In Fig. 2, each dotted line indicates a flow of a control signal and each solid line a flow of a data signal.

When the call reception controller 21 receives a call origination request from the mobile terminal 41 among the plurality of mobile terminals (S1 in Fig. 2), the call reception controller 21 performs a reception determination process for determining whether communication should be accepted between the public base station 31 and the mobile terminal 41 (step S103 in Fig. 3).

When the determination results in accepting the reception, the call reception controller 21 creates the terminal ID storage area 221a and transmission power storage area 221b for the mobile terminal 41 inside the aforementioned transmission power storage 221. Thereafter, the call reception controller 21 assigns, for example, "1" as a terminal ID of the mobile terminal 41 and stores it in the terminal ID storage area 221a (S2 and step S105).

When the reception is accepted in S1, the down A-DPCH transmitter 311 of the public base station 31 sets a down A-DPCH of downlink dedicated to the mobile terminal 41 (S3 and step 106). At the same time, the down A-DPCH transmitter 311 notifies the down A-DPCH transmission power monitor 312 of the transmission power of the down A-DPCH (S4 and step 106).

The down A-DPCH transmission power monitor 312 constantly monitors the transmission power of the down A-DPCH according to the notification, and regularly records the monitoring result in the transmission power storage area 221b corresponding to the terminal ID "1" (S5 and step S107). For example, in the case where the transmission power of the down A-DPCH for the mobile terminal 41 at the present time is "20 dBm," the data storage state at this point is as shown in the uppermost row of the data storage area in the transmission power storage 221 of Fig. 2.

On the other hand, the queue processor 24 refers to the terminal ID stored in the terminal ID storage area 221a (S6) and selects a mobile terminal as a target for transmission of data (step S109). For convenience' sake of description, supposing the mobile terminal 41 is selected as a receiver of data signals, the queue processor 24 sends the given numerical data "1" being the terminal ID of the mobile terminal 41 to the transmission rate controller 23 (S7). This permits the transmission rate controller 23 to identify the data reference address in the transmission power storage 221.

Then the transmission rate controller 23 collates the received numerical data from the queue processor 24 with the numerical data stored in the terminal ID storage area 221a, to specify numerical data agreeing with each other, as the terminal ID of the mobile terminal 41 being the data transmission target. Subsequently, the transmission rate controller 23 acquires the transmission power value "20 dBm" of the down A-DPCH stored in the transmission power storage area 221b in the same record as the terminal ID thus specified (step S111).

Then the transmission rate controller 23 performs a process of collating the transmission power value with the range data stored in the transmission power storage area 222a and specifying range data corresponding to the transmission power value. Since "20 dBm" falls "between 20 dBm inclusive and 25 dBm," the transmission rate controller 23 acquires "32 kbps" which is the numerical data stored in the transmission rate storage area 222b within the same record as the range data (S8). The transmission rate controller 23 determines the acquired numerical data as a transmission rate of the DSCH (step S113) and notifies the queue processor 24 of it (S7).

Receiving the transmission rate data from the transmission rate controller 23 (S7), the queue processor 24 starts a process of transmitting the data signals at the transmission rate (step S115). Namely, the queue processor 24 extracts the predetermined volume of data according to the determined transmission rate from a user data buffer for the mobile terminal 41 (S9) and transfers it to the DSCH transmitter 313 of the public base station 31 (S10). Thereafter, the queue processor 24 notifies the DSCH transmitter 313 of the transmission rate notified of by the transmission rate controller 23 in S7 (S11).

As described above, the mobile communication system 100 in the first embodiment is configured with focus on the synchronism of the transmission power of A-DPCH and the temporal transition thereof with the radio link condition, i.e., the fact that the required transmission power of A-DPCH increases with degradation of the radio link condition. More specifically, since the radio link condition is expected to be good with the transmission power of A-DPCH at a low level, fast transmission of data signals can be implemented and the risk of degradation of communication quality is low even if the transmission rate of DSCH is set high. In contrast to it, since the radio link condition is expected to be bad with the transmission power of A-DPCH at a high level, the adequate communication quality cannot be maintained unless the transmission rate of data signals is lowered. Therefore, the transmission rate of DSCH should better be set low.

In view of the correlation as described above, the radio control apparatus 2 dynamically determines and controls the transmission rates of data signals to be transmitted in time division with the common DSCH to the plurality of mobile terminals 41, 42, 43,... in accordance with the transmission powers of control signals transmitted with the dedicated A-DPCHs for the respective mobile terminals 41, 42, 43,... By this control method, the transmission rate as high as possible can be assigned to the DSCH within the range where the communication quality of data signals can be maintained. As a result, it becomes feasible to minimize the retransmission rate due to transmission error and the interference in the other radio links and, in turn, increase the volume of data transmitted per unit time (throughput) in the entire system.

### (Second Embodiment)

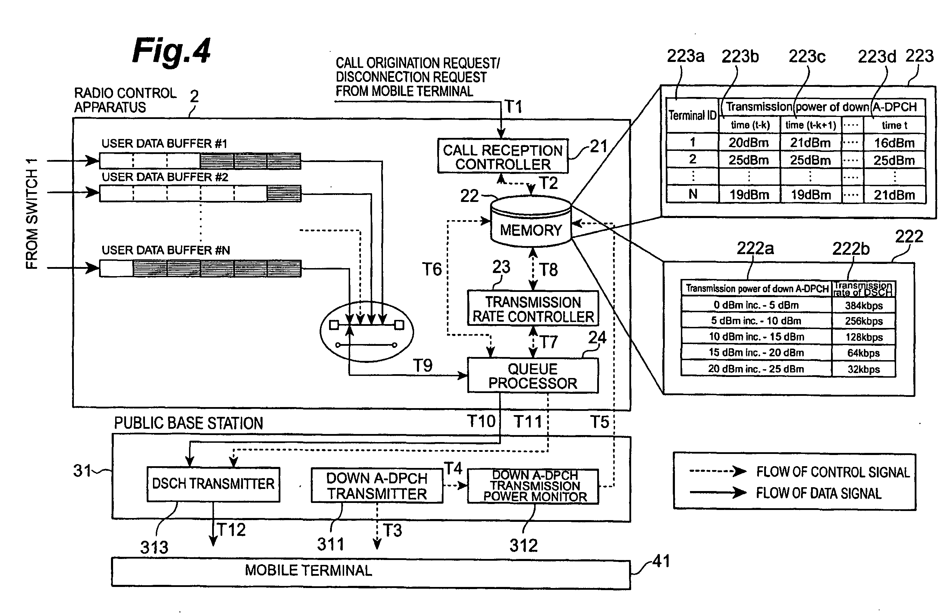

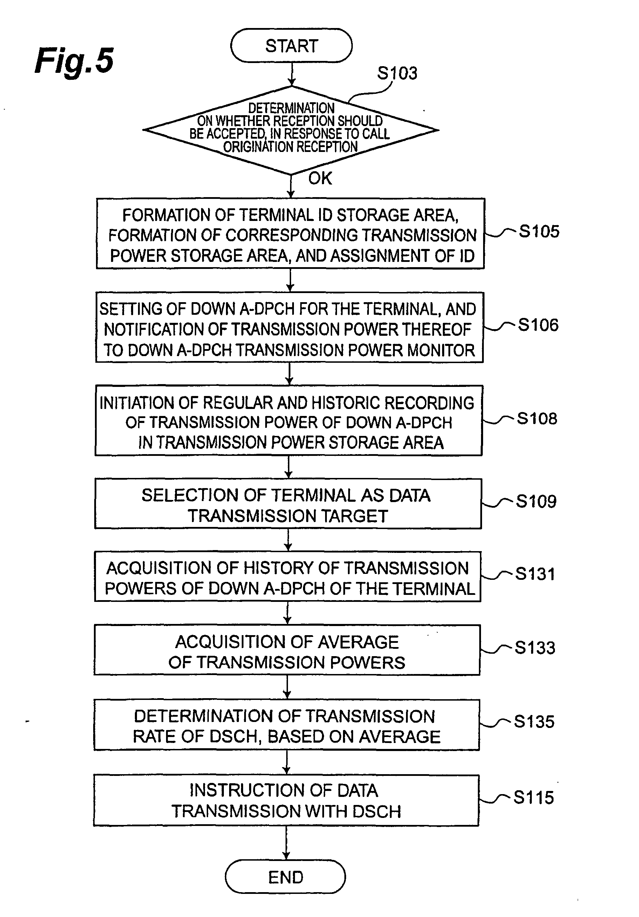

The second embodiment of the present invention will be described with reference to Figs. 4 and 5. Fig. 4 is a conceptual diagram for explaining the functional configuration and operation of the mobile communication system 100 in the second embodiment. As shown in Fig. 3, the fundamental configuration of the mobile communication system 100 in the present embodiment is much the same as the configuration in the first embodiment; therefore, the same reference symbols will denote the respective components without the description thereof and differences from the first embodiment will be detailed below.

Namely, the first embodiment was configured so that the transmission power of down A-DPCH regularly acquired from the down A-DPCH transmitter 311 by the down A-DPCH transmission power monitor 312 was updated and recorded in the transmission power storage 221, whereas the present embodiment is different in that the transmission power of down A-DPCH is added and recorded on a history basis in the transmission power storage 223. For implementing such a storage form, the transmission power storage 223 has a time (t-k) data storage area 223b, a time (t-k+1) data storage area 223c, and a time t data storage area 223d, in addition to the terminal ID storage area 223a, as shown in Fig. 3.

Specifically, the transmission power of down A-DPCH acquired at a time a time period k before the present time t is recorded in the time (t-k) data storage area 223b, and the transmission power of down A-DPCH acquired at a time a time period (k+1) before the present time t is recorded in the time (t-k+1) data storage area 223c. The transmission power of down A-DPCH acquired at the present time (time t) is recorded in the time t data storage area 223d. Likewise, data is added and recorded in the same format as to the transmission powers of down A-DPCHs used by the other mobile terminals 42, 43...

The operation will be described below on the assumption that data signals are transmitted to the mobile terminal 41. The processes in T1-T4 and T9-T11 in Fig. 4 are the same as those in S1-S4 and S9-S11, respectively, detailed in the first embodiment, and the processes in T5-T8 will be described below.

In T5, the down A-DPCH transmission power monitor 312 constantly monitors the transmission power of down A-DPCH according to the notification from the down A-DPCH transmitter 311 and records transmission powers extracted at regular intervals of a fixed period (e.g., 100 ms) from the monitoring result, into the transmission power storage areas 223b, 223c, 223d corresponding to the terminal ID "1". As a consequence, for example, in the case where the transmission powers of the down A-DPCH used by the mobile terminal 41 are 20 dBm, 21 dBm, and 16 dBm at the respective times (t-k), (t-k+1), and t, the data record state is as shown in the uppermost row of the data storage areas in the transmission power storage 223 of Fig. 3 (step S108).

On the other hand, the queue processor 24 refers to the terminal ID stored in the terminal ID storage area 223a (T6) and selects a mobile terminal as a data transmission target (step S109). When the mobile terminal 41 is selected as a receiver of data signals, the queue processor 24 transmits the given numerical data "1" being the terminal ID of the mobile terminal 41 to the transmission rate controller 23 (T7). As a result, the transmission rate controller 23 can identify the data reference address in the transmission power storage 223.

Then the transmission rate controller 23 (corresponding to the calculating means) collates the received numerical data from the queue processor 24 with the numerical data stored in the terminal ID storage area 223a, to specify the numerical data agreeing with each other, as the terminal ID of the mobile terminal 41 being the data transmission target. Subsequently, the transmission rate controller 23 acquires the transmission power values "20 dBm," "21 dBm," and "16 dBm" of down A-DPCH stored in the transmission power storage areas 223b, 223c, and 223d in the same record as the specified terminal ID. In fact, the transmission rate controller 23 acquires the entire data falling under the period from the time (t-k) to the time t out of the transmission power values corresponding to the terminal ID "1," but, for simplicity, the description herein is given on the assumption that the acquired data is three (step S131).

Then the transmission rate controller 23 calculates an average of the transmission powers of down A-DPCH thus acquired (step S133). For example, supposing the three numerical data of "20 dBm," "21 dBm," and "16 dBm" are acquired as the transmission powers of down A-DPCH, the controller obtains an arithmetic mean 19 dBm from (20+21+16)/3. The average calculated at this time does not have to be limited to the arithmetic mean, but may be any average that can be a value enough to eliminate the sudden variation in the transmission power; for example, the average may be a geometric mean or the like.

Then the transmission rate controller 23 collates the result of the above calculation (average) with the range data stored in the transmission power storage area 222a, to specify the range data corresponding to the transmission power value. Since "19 dBm" falls "between 15 dBm inclusive and 20 dBm," the transmission rate controller 23 acquires "64 kbps" which is the numerical data stored in the transmission rate storage area 222b in the same record as the range data in the transmission rate storage 222 (T8). The transmission rate controller 23 determines the acquired numerical data as a transmission rate of DSCH (step S135) and notifies the queue processor 24 of it (T7).

Thereafter, as in the case of the first embodiment, the queue processor 24 extracts transmitted data in the volume (the number of packet data) according to the determined transmission rate from the user data buffer and transfers the transmitted data and transmission rate to the DSCH transmitter 313 (step S115). Then the DSCH transmitter 313 performs the data transmission to the mobile terminal 41 with the DSCH.

In the mobile communication system 100 in the present embodiment, as described above, the values of transmission powers the predetermined periods before, together with the up-to-date transmission power, are recorded on a history basis in the transmission power storage 223. Then the transmission rate controller 23 calculates the average over the predetermined period of the transmission powers of the control signal and determines the transmission rate of data signals on the basis of the result of the calculation. Even if degradation of the communication environment should invoke a sudden increase in the transmission power, the above processing would permit highly accurate control of the transmission rate with minimal influence of the sudden increase. As a result, the volume of data transmitted per unit time in DSCH can be increased more.

For example, supposing during the monitoring of the transmission power by the down A-DPCH transmission power monitor 312 the communication environment degrades for some reason, e.g., because of passage of an obstacle such as an automobile or the like between the public base station 31 and the mobile terminal 41 and the transmission power of down A-DPCH temporarily demonstrates a high value of about 24 dBm, application of the transmission rate control in the first embodiment will result in determining the transmission power of down A-DPCH on the basis of the temporary point and determining the transmission rate of DSCH to be the minimum rate of 32 kbps, though the increase of transmission power is the sudden increase. With application of the transmission rate control in the second embodiment, however, even if the transmission power of down A-DPCH temporarily demonstrates a high value of 24 dBm or the like and if it is estimated that the increase of transmission power is a sudden increase and it is possible to instantly recover the good communication environment, the transmission rate of DSCH will be determined to be the maximum speed in the range where the communication quality can be maintained.

### (Third Embodiment)

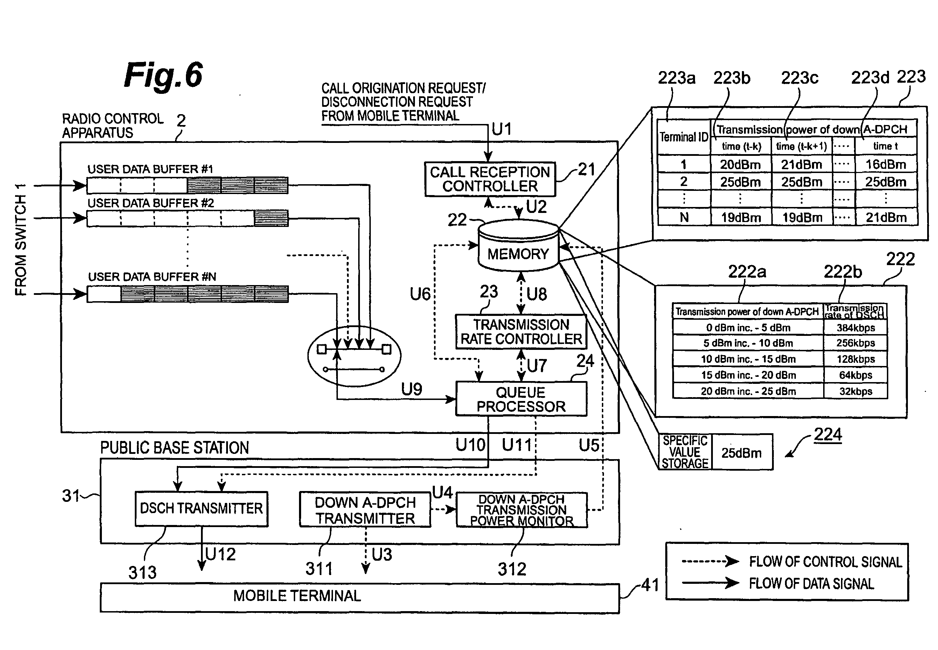

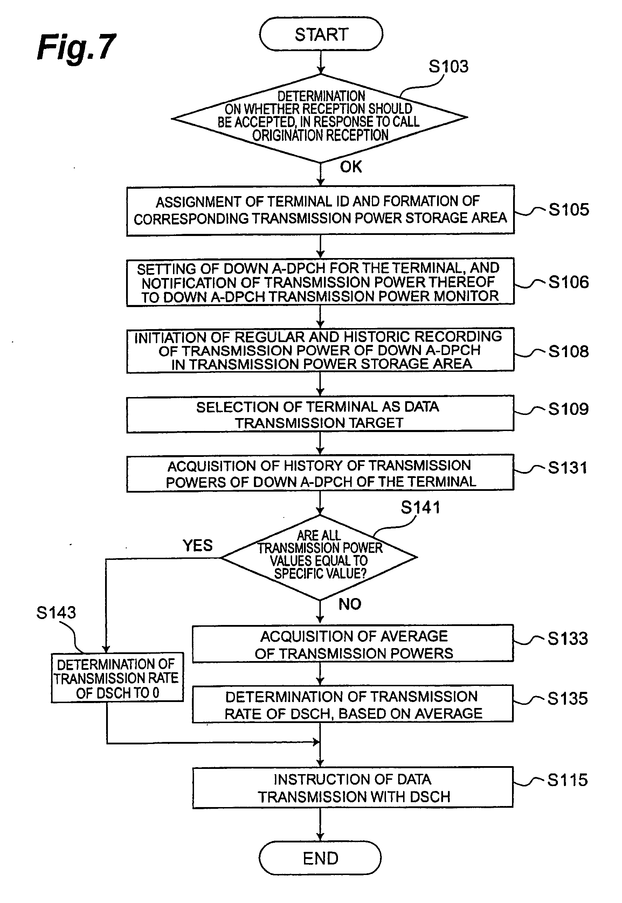

The third embodiment of the present invention will be described with reference to Figs. 6 and 7. Fig. 6 is a conceptual diagram for explaining the functional configuration and operation of the mobile communication system 100 in the third embodiment. As shown in Fig. 6, the fundamental configuration of the mobile communication system 100 in the present embodiment is much the same as the configuration in the second embodiment; therefore, the same reference symbols will denote the respective components without the description thereof and differences from the second embodiment will be detailed below.

Namely, the second embodiment used the plurality of transmission powers of down A-DPCH acquired at regular intervals, in the calculation of the average, whereas the present embodiment is different in that the data is used in recognition of presence or absence of a secular change in the transmission power. For implementing such functionality, the radio control apparatus 2 in the present embodiment has a specific value storage 224. The specific value storage 224 stores specific value data as a criterion of judgment for uniformity of the transmission power, as shown in Fig. 6.

The operation will be described below on the assumption that data signals are transmitted to the mobile terminal 41. The processes in U1-U6 and U9-U11 in the figure are the same as those in T1-T6 and T9-T11, respectively, detailed in the second embodiment, and the processes in U7-U8 will be described below.

Namely, in U8 in the figure, the transmission rate controller 23 acquires the transmission power values of down A-DPCH stored in the transmission power storage areas 223b, 223c, and 223d in the same record as the terminal ID specified in U7 (step S131). The transmission power data acquired at this time is a total of (k+1) numerical data acquired from the down A-DPCH transmission power monitor 312 in the predetermined time period (period k) in U5.

Subsequently, the transmission rate controller 23 retrieves the above specific value data (e.g., 25 dBm) from the specific value storage 224 and determines whether the specific value data agrees with the transmission power values of down A-DPCH acquired above (step S141). When the result of the determination is that all the values agree with the specific value, the transmission rate controller 23 judges that the transmission powers of down A-DPCH remain at the upper limit (i.e., the radio link condition is continuously bad), and notifies the queue processor 24 of the transmission rate of "0 kbps" (U7 and step S143) while skipping the average calculating process and the process of referring to the data in the transmission rate storage 222. On the other hand, when the result of the determination is that even only one of the data is different from the specific value, the average is calculated and thereafter the corresponding transmission rate is acquired (step S133 and step S135), as in the processes in the second embodiment.

For example, noting the mobile terminal having the terminal ID "2," the record in the second row inside the transmission power storage 223 shown in Fig. 4 indicates that all the transmission powers of down A-DPCH acquired by the transmission rate controller 23 are the upper limit of 25 dBm. In this case, the transmission rate controller 23 determines the transmission rate of DSCH to be "0 kbps," without reference to the data in the transmission rate storage 222, and notifies the queue processor 24 of it.

Thereafter, the queue processor 24 transfers the transmission rate "0" to the DSCH transmitter 313 of the public base station 31 in accordance with the notification of the transmission rate from the transmission rate controller 23, thereby terminating the data transmission to the mobile terminal 41 (step S115). Then the processor searches the terminal ID storage area 223a for a terminal ID of a mobile terminal as a next transmission target and repeatedly executes the processing from U6.

In the mobile communication system 100 in the present embodiment, as described above, the values of transmission powers in the predetermined time period before, together with the up-to-date transmission power, are added and recorded on a history basis in the transmission power storage 223. Then the transmission rate controller 23 monitors the transition of transmission powers of the control signal and, if the transmission powers remain at the specific value over the predetermined period, the controller determines the transmission rate of data signals to 0 and stops the transmission of data signals. The fact that the transmission powers of the control signal remain at the upper limit means that the extremely bad condition of the radio link continues between the public base station 31 and the mobile terminal 41. An attempt to transmit data signals in this condition will give rise to transmission error at high probability and will be a cause to lower the throughput in the entire system. Therefore, the data transmission is temporarily stopped to the mobile terminal 41 and the data transmission is preferentially carried out to another mobile terminal in a good radio link condition, whereby the volume of data transmitted per unit time in DSCH can be increased.

### (Fourth Embodiment)

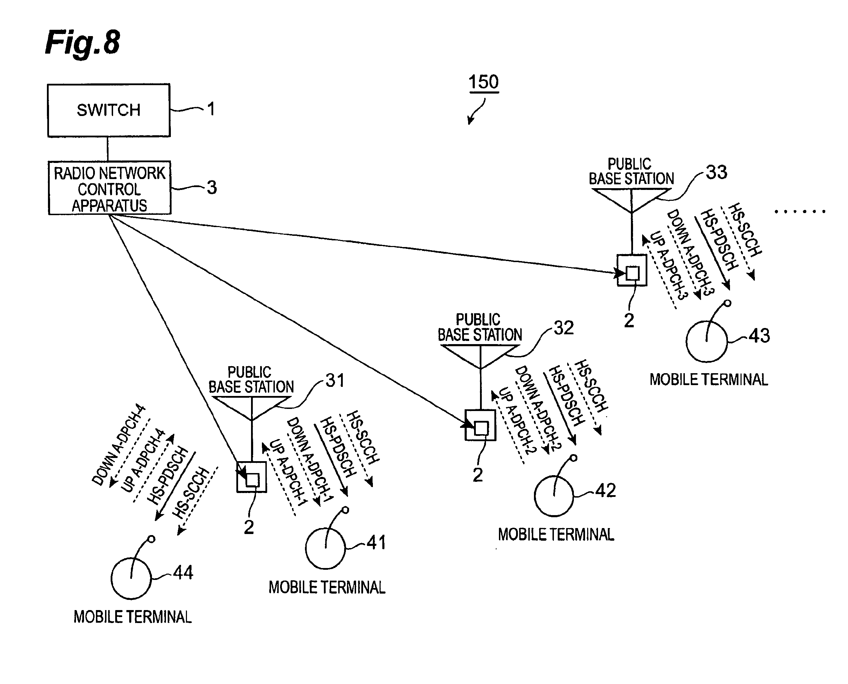

The fourth embodiment of the present invention will be described below with reference to Figs. 8 to 10. Fig. 8 is a schematic diagram showing an overall configuration example of the mobile communication system 150 in the present embodiment. The mobile communication system 150 in the present embodiment is constructed by adopting the IMT-2000 packet communication scheme using HSDPA (High Speed Downlink Packed Access). This HSDPA involves adaptive control on the transmission rates and coding method of data signals, hybrid ARQ, i.e., a combinational transmission method of retransmission control with error codes, etc. and scheduling of packets is implemented in each public base station (BTS, Base Transceiver Station), thus substantiating fast scheduling. This HSDPA is described in detail, for example, in the technical specifications (Technical Specifications) by the third generation partnership project (3rd Generation Partnership Project; Technical Specification Group Radio Access Network); "Physical channels and mapping of transport channels onto physical channels (FDD) (Release 5)" 3GPP TS 25.211 V5.1.0 (2002-06), "Multiplexing and channel coding (FDD) (Release 5)" 3GPP TS 25.212 V5.1.0 (2002-06), "Spreading and modulation (FDD) (Release 5)" 3GPP TS 25.213 V5.1.0 (2002-06), "Physical layer procedures (FDD) (Release 5)" 3GPP TS 25.214 V5.1.0 (2002-06), "Physical layer-Measurements (FDD) (Release 5)" 3GPP TS 25.215 V5.0.0 (2002-03), and in the technical reports (Technical Reports) of the same project; "Physical layer aspects of UTRA High Speed Downlink Packet Access (Release 4) 3GPP TR 25.848 V4.0.0 (2001-03) and others (http://www.3gpp.org/ftp/Specs/latest/Rel-5/25_series/25211-510.zip/, 25212-510.zip, 25213-510.zip, 25214-510.zip, 25215-500.zip, http://www.3gpp.org/ftp/Specs/latest/Rel-4/25_series/25848-400.zip/ and so on).

The mobile communication system 150 will be detailed below. As shown in Fig. 8, the mobile communication system 150 is a system capable of packet transmission of data signals to mobile terminals, and has mobile terminals 41, 42, 43, 44 carried and used by users and located in predetermined communication areas, public base stations 31, 32, 33 capable of direct radio communication with the mobile terminals 41-44, radio control apparatus 2, 2, 2 provided in the respective public base stations 31-33 and configured to totally control respective packet communication operations between the public base stations 31-33 and the mobile terminals 41-44, a switching unit 1 functioning as a relay center to an external network, and a radio network control apparatus 3 for relaying signals between the switching unit 1 and the plurality of public base stations 31-33, and the devices from the switching unit 1 to the mobile terminals 41-44 are configured to be bidirectionally communicable.

In this mobile communication system 100, three types of channels are used in transmission of signals from the public base stations 31-33 to the mobile terminals 41-44. A first channel is HS-PDSCH (High Speed Physical Downlink Shared CHanel) which is shared in a time-shared manner among the plurality of mobile terminal 41 and others, which is used in transmission of data signals, and which has a large transmission power required and a high speed requested. A second channel is HS-SCCH (High Speed Shared Control CHannel) which is shared in a time-shared manner among the plurality of mobile terminals 41-44, which is used in transmitting a signal indicating that data transport by HS-PDSCH will be started, and which has a relatively small transmission power. The last channel is down A-DPCH (Associated Dedicated Physical CHannel) which is set for every mobile terminal 41-44, as in the mobile communication system 100 in the first embodiment, which transmits a power control command (first signal) to the mobile terminal 41 or the like, and the transmission power of which is controlled in a closed loop by a power control command from the mobile terminal 41 or the like.

Transmitted in the uplink are the control signals, data signals, and power control command multiplexed on an up A-DPCH set for every mobile terminal.

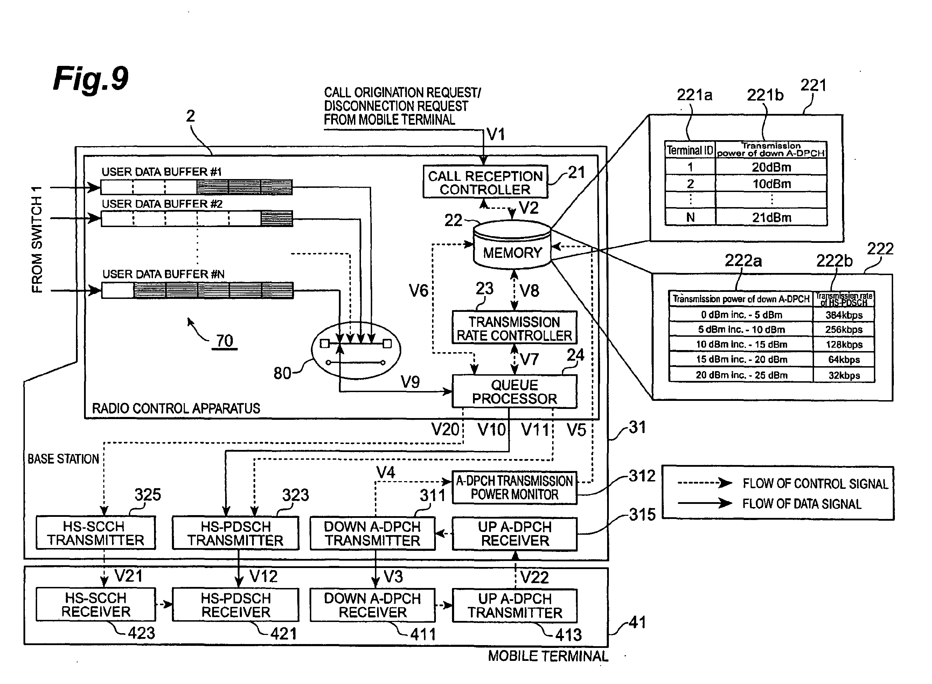

The internal configuration of the public base station 31 will be described below in detail with reference to Fig. 9. The public base station 31 has a radio control apparatus 2, an HS-PDSCH transmitter (second channel transmitting means) 323, an HS-SCCH transmitter 325, a down A-DPCH transmitter (first channel transmitting means) 311, an up A-DPCH receiver 315, and an A-DPCH transmission power monitor 312.

The radio control apparatus 2 is mainly comprised of a call reception controller 21, a memory 22, a transmission rate controller 23 (corresponding to the acquiring means and the determining means), a queue processor 24 (corresponding to the instructing means), user data buffers 70, and a selector 80 as the radio control apparatus 2 in the first embodiment was, and these parts are connected through a bus. Each of the components will be described below in detail.

The configuration of the call reception controller 21 is much the same as that in the first embodiment.

The memory 22 is comprised of a transmission power storage 221 and a transmission rate storage 222. The configuration of the transmission power storage 221 is much the same as that in the first embodiment.

The transmission rate storage 222 (corresponding to the storage means) has at least a transmission power storage area 222a and a transmission rate storage area 222b inside. The transmission power storage area 222a updatably stores as "transmission powers of down A-DPCH" numerical data (e.g., "between 0 inclusive and 5," "between 5 inclusive and 10," "between 10 inclusive and 15," "between 15 inclusive and 20," "between 20 inclusive and 25") indicating ranges of transmission power (in units of dBm) in down A-DPCH. The transmission rate storage area 222b stores as "transmission rates" numerical data (e.g., "384," "256," "128," "64," "32") indicating transmission rates (in units of kbps) of data signals in HS-PDSCH. This correspondence between transmission powers of down A-DPCH and transmission rates of HS-PDSCH is preliminarily set and stored prior to the control.

The transmission rate controller 23 acquires a transmission power of down A-DPCH from the transmission power storage 221 and determines a transmission rate of HS-PDSCH on the basis of the correspondence between transmission powers and transmission rates stored in the transmission rate storage 222.

The user data buffers 70 receive and store data to be transmitted to the respective mobile terminals 41-44, from the switching unit 1 side.

The queue processor 24 determines the mobile terminal 41 or the like as a receiver of data, receives the user data addressed to the mobile terminal in question, through the selector 80 from the corresponding user data buffer 70, and transmits it to the HS-PDSCH transmitter 323. The queue processor 24 acquires the transmission rate of HS-PDSCH from the transmission rate controller 23 and instructs the HS-PDSCH transmitter 323 to transmit data at the transmission rate acquired. At the same time, the queue processor 24 indicates an offset value to be added to the transmission power, to the HS-PDSCH transmitter 323. Furthermore, the queue processor 24 instructs the HS-SCCH transmitter 325 to transmit a control signal indicating that data transmission will be performed with HS-PDSCH, to the mobile terminal 41 or the like which undergoes the data transmission with HS-PDSCH. This control signal contains the user ID of the mobile terminal undergoing the data transmission, the transmission rate, the volume of data, etc. and this control signal is transmitted to the mobile terminal 41 or the like before execution of the data transmission from the HS-PDSCH transmitter 323.

The configuration of the public base station 31 except for the radio control apparatus 2 will be described below.

The up A-DPCH receiver 315 receives each power control command on the transmission power of down A-DPCH, transmitted with up A-DPCH from the mobile terminal 41 or the like.

The up A-DPCH receiver 315 evaluates the reception quality of the received signal of up A-DPCH on the basis of SIR (signal to interference power ratio) or the like and, for example, compares the evaluation result with a predetermined target value, so as to generate a power control command about the transmission power of up A-DPCH.

The down A-DPCH transmitter 311 transmits to the mobile terminal 41 or the like the power control command on the transmission power of up A-DPCH generated in the up A-DPCH receiver 315, using the down A-DPCH. The transmission rate of the power control command used herein is a fixed speed defined by a telecommunications carrier or by a standardization organization.

The up A-DPCH receiver 315 controls the down A-DPCH transmitter 311 so that the transmission power of down A-DPCH becomes an optimal value according to the link condition or the like between the public base station 31 and the mobile terminal 41, on the basis of the received power control command on the transmission power of down A-DPCH.

The down A-DPCH from the public base station 31 to the mobile terminal 41-44 is established after reception is accepted in the call reception controller 21.

The A-DPCH transmission power monitor 312 monitors the transmission power of down A-DPCH between the down A-DPCH transmitter 311 and the mobile terminal 41-44. Then the monitoring result, i.e., the transmission power of down A-DPCH is recorded in the transmission power storage area 221b corresponding to the terminal ID formed inside the transmission power storage 221 of the radio control apparatus 2. Since the numerical data indicating the transmission power of down A-DPCH is constantly updated at the same time as the monitoring, the up-to-date transmission power is always recorded for every mobile terminal in the transmission power storage area 221b.

The HS-SCCH transmitter 325 preliminarily transmits to the communication terminal 41 or the like a control signal for notifying the mobile terminal 41 or the like undergoing the transmission that data signals will be transmitted with HS-PDSCH, in accordance with an instruction from the queue processor 24. Since the transmission of the control signal is performed prior to the data transport with HS-PDSCH, the mobile terminal 41 can recognize the fact before reception of the data signals. This permits the public base station 31 to freely switch a mobile terminal as a receiver of data to another.

After the HS-SCCH transmitter 311 transmits the control signal on the basis of the instruction from the queue processor 24, the HS-PDSCH transmitter 323 establishes an HS-PDSCH between itself and the mobile terminal 41 associated with the instruction and performs packet transmission of data signals with the HS-PDSCH. As detailed later, the transmission rate of data signals can be changed at intervals of a predetermined period (e.g., 10 ms) in the standard specifications and is variably determined according to an instruction from the queue processor 24. The transmission power of HS-PDSCH is set by adding the offset value designated by the queue processor 24, to the transmission power of down A-DPCH. Therefore, in the case where the transmission power of down A-DPCH is 22 dBm and the offset value 10 dBm, the transmission power of DSCH is set at 32 dBm.

The mobile terminal 41 is a cellular phone and is provided with at least an HS-SCCH receiver 423, an HS-PDSCH receiver 421, a down A-DPCH receiver 411, and an up A-DPCH transmitter 413.

The HS-SCCH receiver 423 receives the control signal notifying that transmission of data signals from the public base station 31 will be carried out, through HS-SCCH.

The HS-PDSCH receiver 421 starts the reception of data signals with HS-PDSCH from the HS-PDSCH transmitter 313 only when the HS-SCCH receiver 423 preliminarily receives the control signal notifying that the transmission of data signals to the mobile terminal 41 will be performed.

The down A-DPCH receiver 411 receives the power control command on the transmission power of up A-DPCH, transmitted with the down A-DPCH from the public base station 31.

The down A-DPCH receiver 411 evaluates the reception quality of the received signal of down A-DPCH on the basis of SIR (signal to interference power ratio) or the like and, for example, compares the evaluation result with a predetermined target value, so as to generate the power control command on the transmission power of down A-DPCH.

The up A-DPCH transmitter 413 transmits to the public base station 31 the power control command on the transmission power of down A-DPCH generated by the down A-DPCH receiver 411, using the up A-DPCH. The transmission rate of the power control command used is a fixed speed defined by a telecommunications carrier or by a standardization organization.

The down A-DPCH receiver 411 controls the up A-DPCH transmitter 413 so that the transmission power of up A-DPCH becomes an optimal value according to the link condition between the public base station 31 and the mobile terminal 41, on the basis of the received power control command on the transmission power of up A-DPCH.

The above described the configuration of each terminal equipment constituting the mobile communication system 100 according to the present invention, and it is noted that the major configurations of the public base stations 32, 33,..., and the mobile terminals 42, 43,... illustrated are the same as those of the public base station 31 and the mobile terminal 41 detailed and that the illustration and detailed description of the configurations are thus omitted.

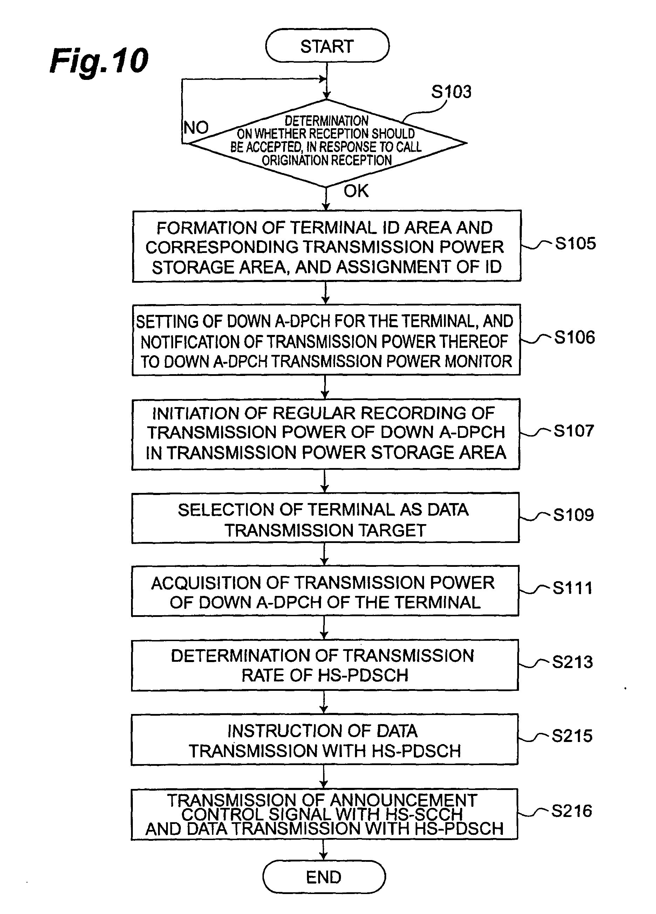

The operation of the public base station 31 in the present embodiment will be described below with reference to Figs. 9 and 10. The description below will focus on a particular case where the mobile terminal 41 existing in the communication area of the public base station 31 sends a call origination request, and will illustratively detail control of the transmission rate of data signals between the public base station 31 and mobile terminal 41, and it is a matter of course that the present invention is by no means intended to be limited to the transmission rate control technology between these devices.

Prior to the control, the correspondence between the transmission powers of down A-DPCH and transmission rates of HS-DPSCH, e.g., a data table or the like is preliminarily stored in the transmission rate storage 222 of the memory 22. In the present embodiment, as an example, the transmission rates of HS-DPSCH are set corresponding to the predetermined ranges of transmission powers of down A-DPCH, as shown in Fig. 9. The data table or the like as described above may be updated during the control as occasion demands.

When the call reception controller 21 receives a call origination request from the mobile terminal 41 among the plurality of mobile terminals (V1), the call reception controller 21 performs the reception determination process for determining whether communication should be accepted between the public base station 31 and the mobile terminal 41 (step S103).

When the determination results in accepting the reception, the call reception controller 21 creates the terminal ID storage area 221a and transmission power storage area 221b for the mobile terminal 41 inside the aforementioned transmission power storage 221. Thereafter, the call reception controller 21 assigns, for example, "1" as a terminal ID of the mobile terminal 41 and stores it in the terminal ID storage area 221a (V2) (step S105). On the other hand, when in step S203 the reception is rejected, the controller awaits a next call origination request.

When the reception is accepted in V1, the down A-DPCH transmitter 311 of the public base station 31 sets a downward down A-DPCH dedicated to the mobile terminal 41 and transmits a control command on the transmission power of up A-DPCH (V3 and step 106), and the up A-DPCH transmitter 413 of the mobile terminal 41 sets an up A-DPCH and transmits a control command on the transmission power of down A-DPCH (V22).

Here the transmission power of down A-DPCH is controlled in a closed loop on the basis of the power control command from the mobile terminal 41, while the transmission power of up A-DPCH is controlled in a closed loop on the basis of the power control command from the public base station 31; thus each transmission power is controlled so as to be an optimal transmission power according to the link condition between the mobile terminal 41 and the public base station 31.

The down A-DPCH transmitter 311 notifies the A-DPCH transmission power monitor 312 of the transmission power of down A-DPCH (V4 and step 106).

The A-DPCH transmission power monitor 312 constantly monitors the transmission power of down A-DPCH in accordance with the notification and regularly records the monitoring result in the transmission power storage area 221b corresponding to the terminal ID "1" (V5 and step S107). Namely, the transmission power of down A-DPCH is updated and recorded in the transmission power storage 221 in the memory 22. For example, in the case where the transmission power of down A-DPCH for the mobile terminal 41 at the present time is "20 dBm," the data storage state at this point is as shown in the uppermost row of the data storage area in the transmission power storage 221 of Fig. 9.

Then the queue processor 24 refers to the terminal ID stored in the terminal ID storage area 221a (V6) and selects the mobile terminal as a target for transmission of data (step S109).

For convenience' sake of description, supposing the mobile terminal 41 is selected as a receiver of data signals, the queue processor 24 sends the given numerical data "1" being the terminal ID of the mobile terminal 41 to the transmission rate controller 23 (V7). This permits the transmission rate controller 23 to identify the data reference address in the transmission power storage 221.

Then the transmission rate controller 23 collates the received numerical data from the queue processor 24 with the numerical data stored in the terminal ID storage area 221a, to specify numerical data agreeing with each other, as the terminal ID of the mobile terminal 41 being the data transmission target. Subsequently, the transmission rate controller 23 acquires the transmission power value "20 dBm" of down A-DPCH stored in the transmission power storage area 221b in the same record as the terminal ID thus specified. Namely, the transmission rate controller 23 acquires the transmission power of down A-DPCH for the mobile terminal 41 as a data transmission target (step S111).

Then the transmission rate controller 23 performs the process of collating the transmission power value with the range data stored in the transmission power storage area 222a and specifying range data corresponding to the transmission power value. Since "20 dBm" falls "between 20 dBm inclusive and 25 dBm," the transmission rate controller 23 acquires "32 kbps" which is the numerical data stored in the transmission rate storage area 222b in the same record as the range data (V8). Then the transmission rate controller 23 determines the acquired numerical data as a transmission rate of HS-PDSCH and notifies the queue processor 24 of it (V7). Namely, the transmission rate controller 23 determines the transmission rate of HS-PDSCH (step S213)

Receiving the transmission rate data from the transmission rate controller 23 (V7), the queue processor 24 starts the process of transmitting the data signals at the transmission rate. Namely, the queue processor 24 extracts the predetermined volume of data (the number of packet data) according to the determined transmission rate from the user data buffer for the mobile terminal 41 (V9) and transfers it to the HS-PDSCH transmitter 323 (V10). Thereafter, the queue processor 24 notifies the HS-PDSCH transmitter 313 of the transmission rate notified of by the transmission rate controller 23 in S7 (V11). Furthermore, the queue processor 24 instructs the HS-SCCH transmitter 325 to transmit a control signal notifying that data transmission will be carried out by the HS-PDSCH transmitter 323, to the mobile terminal 41 (V20). Namely, the queue processor 24 instructs the transmitter to perform the data transmission at the determined transmission rate (step S215). When the radio control apparatus 2 orders the data transmission as described above, an announcement control signal of the data transmission is transmitted with HS-SCCH (V21 and step 126) and thereafter the transmission of data is carried out at the predetermined transmission rate with HS-PDSCH (V12 and step 216).

As described above, the mobile communication system 150 in the fourth embodiment is constructed with focus on the synchronization of the transmission power of down A-DPCH and the temporal transition thereof with the radio link condition, i.e., the fact that the required transmission power of A-DPCH increases with degradation of the radio link condition. In other words, the transmission power of down A-DPCH is controlled by the power control command from the mobile terminal 41 and attention is focused on that the transmission power of down A-DPCH reflects the radio link condition between the mobile terminal 41 and the public base station 31. More specifically, the radio link condition is expected to be good with the transmission power of down A-DPCH at a low level; therefore, the fast transmission of data signals can be implemented and the risk of degradation of communication quality is low even if the transmission rate of HS-PDSCH is set high. In contrast to it, the radio link condition is expected to be bad with the transmission power of down A-DPCH at a high level; therefore, the adequate communication quality cannot be maintained unless the transmission rate of data signals with HS-PDSCH is lowered. Accordingly, the transmission rate of HS-PDSCH should better be set at a low value.

In view of the correlation as described above, the radio control apparatus 2 dynamically determines and controls the transmission rates of data signals transmitted with the common HS-PDSCH used in a time-shared manner among the plurality of mobile terminals 41, 42, 43,..., in accordance with the transmission powers of down A-DPCHs transmitted with the dedicated channels for the respective mobile terminals 41, 42, 43,..., each transmission power being controlled according to the link condition. By the control method as described above, the transmission.rate as high as possible can be assigned to the HS-PDSCH within the range where the communication quality of data signals can be maintained. As a consequence, it becomes feasible to minimize the retransmission rate due to transmission error and the interference in the other radio links and, in turn, increase the volume of data transmitted per unit time (throughput) in the entire system.

In the mobile communication system using HSDPA, each mobile terminal receives the signal of CPICH (Common Pilot Channel) being a common channel transmitted from the public base station and the mobile terminal transmits SIR thereof to the base station. For this reason, it can also be contemplated that the transmission rate of HS-DPSCH is controlled on the basis of SIR of CPICH transmitted from the mobile terminal. However, the control on the transmission rate of HS-DPSCH on the basis of the transmission power of A-DPCH dedicatedly established for each mobile terminal, the transmission power being controlled at high speed in the closed loop, as in the present embodiment is better in achieving the control with higher efficiency, because the delay of control is smaller against variation in the link condition.

### (Fifth Embodiment)

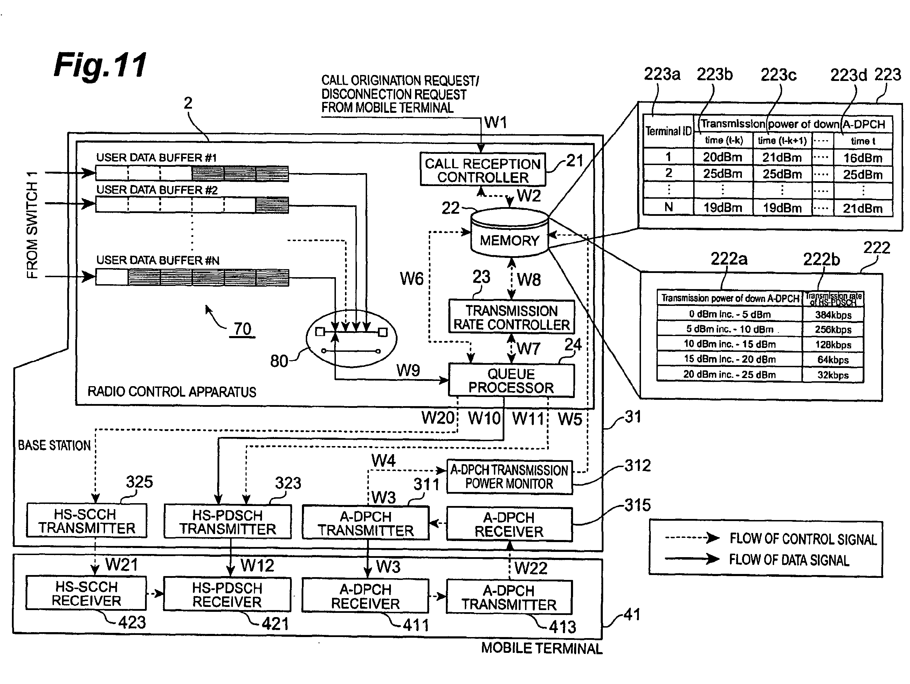

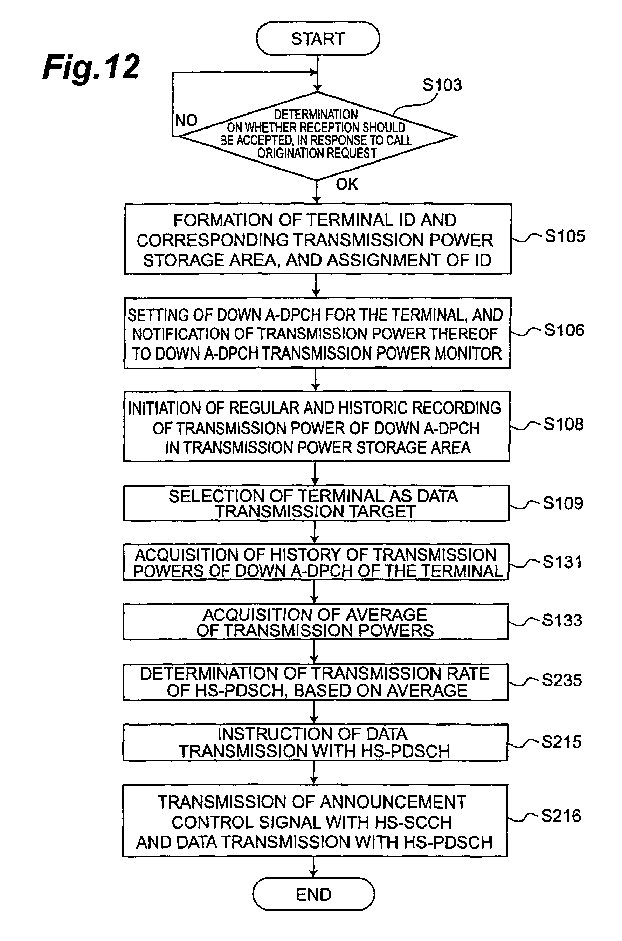

The fifth embodiment of the present invention will be described below with reference to Figs. 11 and 12. Fig. 11 is a conceptual diagram for explaining the functional configuration and operation of the mobile communication system 150 in the fifth embodiment. The fundamental configuration of the mobile communication system 150 in the present embodiment is much the same as the configuration in the fourth embodiment; therefore, the same reference symbols will denote the respective components without the description thereof and differences from the fourth embodiment will be detailed below.

Namely, the fourth embodiment was configured so that the transmission power of down A-DPCH regularly acquired from the down A-DPCH transmitter 311 by the A-DPCH transmission power monitor 312 was updated and recorded in the transmission power storage 221, whereas the present embodiment is different in that the transmission power of down A-DPCH is added and recorded on a history basis in the transmission power storage 223. For implementing such a storage form, the transmission power storage 223 has a time (t-k) data storage area 223b, a time (t-k+1) data storage area 223c, and a time t data storage area 223d, in addition to the terminal ID storage area 223a, as shown in Fig. 11.

Specifically, the transmission power of down A-DPCH acquired at a time a time period k before the present time t is recorded in the time (t-k) data storage area 223b, and the transmission power of down A-DPCH acquired at a time a time period (k+1) before the present time t is recorded in the time (t-k+1) data storage area 223c. The transmission power of down A-DPCH acquired at the present time (time t) is recorded in the time t data storage area 223d. Likewise, data is added and recorded in the same format as to the transmission powers of down A-DPCHs used by the other mobile terminals 42, 43...

The transmission rate controller 23 also functions as a calculating means for calculating an average of transmission powers of down A-DPCH on the basis of the history data of the transmission powers of down A-DPCH acquired from the transmission power storage 223 of the memory 22. Then the transmission rate controller 23 determines the transmission rate of HS-PDSCH on the basis of the average by making use of the correspondence between transmission powers and transmission rates stored in the transmission rate storage 222.

The operation will be described below on the assumption that data signals are transmitted to the mobile terminal 41. The processes in W1-W4 and W9-W22 in the figure are the same as those in V1-V4 and V9-V22, respectively, detailed in the fourth embodiment, and the processes in W5-W8 will be described below.

In W5, the down A-DPCH transmission power monitor 312 constantly monitors the transmission power of down A-DPCH according to the notification from the down A-DPCH transmitter 311 and records, on a regular basis and in an accessible state to the history of transmission powers, transmission powers extracted at regular intervals of a fixed period (e.g., 100 ms) from the monitoring result, into the transmission power storage areas 223b, 223c, 223d corresponding to the terminal ID "1" (step S108). As a consequence, for example, in the case where the transmission powers of the down A-DPCH used by the mobile terminal 41 are 20 dBm, 21 dBm, and 16 dBm at the respective times (t-k), (t-k+1), and t, the data record state is as shown in the uppermost row of the data storage areas in the transmission power storage 223 of Fig. 11.

On the other hand, the queue processor 24 refers to the terminal ID stored in the terminal ID storage area 223a (W6) and selects a mobile terminal as a data transmission target (step S109). When the mobile terminal 41 is selected as a receiver of data signals, the queue processor 24 transmits the given numerical data "1" being the terminal ID of the mobile terminal 41 to the transmission rate controller 23 (W7). As a result, the transmission rate controller 23 can identify the data reference address in the transmission power storage 223.

Then the transmission rate controller 23 collates the received numerical data from the queue processor 24 with the numerical data stored in the terminal ID storage area 223a, to specify the numerical data agreeing with each other, as the terminal ID of the mobile terminal 41 being the data transmission target. Subsequently, the transmission rate controller 23 acquires the transmission power values "20 dBm," "21 dBm," and "16 dBm" of down A-DPCH stored in the transmission power storage areas 223b, 223c, and 223d in the same record as the specified terminal ID. In fact, the transmission rate controller 23 acquires the entire data falling under the period from the time (t-k) to the time t out of the transmission power values corresponding to the terminal ID "1," but, for simplicity, the description herein is given on the assumption that the acquired data is three (step S131).

Then the transmission rate controller 23 calculates an average of the transmission powers of down A-DPCH thus acquired (step S133). For example, supposing the three numerical data of "20 dBm," "21 dBm," and "16 dBm" are acquired as the transmission powers of down A-DPCH, the controller obtains an arithmetic mean 19 dBm from (20+21+16)/3. The average calculated at this time does not have to be limited to the arithmetic mean, but may be any average that can be a value enough to eliminate the sudden variation in the transmission power; for example, the average may be a geometric mean or the like.

Then the transmission rate controller 23 collates the result of the above calculation (average) with the range data stored in the transmission power storage area 222a, to specify the range data corresponding to the transmission power value. Since "19 dBm" falls "between 15 dBm inclusive and 20 dBm," the transmission rate controller 23 acquires "64 kbps" which is the numerical data stored in the transmission rate storage area 222b in the same record as the range data in the transmission rate storage 222 (W8) (step S235). The transmission rate controller 23 determines the acquired numerical data as a transmission rate of DSCH and notifies the queue processor 24 of it (W7).

Thereafter, as in the first embodiment, the queue processor 24 orders the data transmission with HS-PDSCH (step S215) and the data transmission to the mobile terminal 41 is carried out.

In the mobile communication system 150 in the present embodiment, as described above, the values of transmission powers the predetermined time period before, together with the up-to-date transmission power, are recorded on a history basis in the transmission power storage 223. Then the transmission rate controller 23 calculates the average over the predetermined period of the transmission powers of the control signal and determines the transmission rate of data signals on the basis of the result of the calculation. Even if degradation of the communication environment should invoke a sudden increase in the transmission power, the above processing would permit highly accurate control of the transmission rate with minimal influence of the sudden increase. As a result, the volume of data transmitted per unit time in HS-PDSCH can be increased more.

For example, supposing during the monitoring of the transmission power by the down A-DPCH transmission power monitor 312 the communication environment degrades for some reason, e.g., because of passage of an obstacle such as an automobile or the like between the public base station 31 and the mobile terminal 41 and the transmission power of down A-DPCH temporarily demonstrates a high value of about 24 dBm, application of the transmission rate control in the fourth embodiment will result in determining the transmission power of down A-DPCH on the basis of the temporary point and determining the transmission rate of HS-PDSCH to be the minimum rate of 32 kbps, though the increase of transmission power is the sudden increase. With application of the transmission rate control in the fifth embodiment, however, even if the transmission power of down A-DPCH temporarily demonstrates a high value of 24 dBm or the like and if it is estimated that the increase of transmission power is a sudden increase and it is possible to instantly recover the good communication environment, the transmission rate of HS-PDSCH will be determined to be the maximum speed in the range where the communication quality can be maintained.

### (Sixth Embodiment)

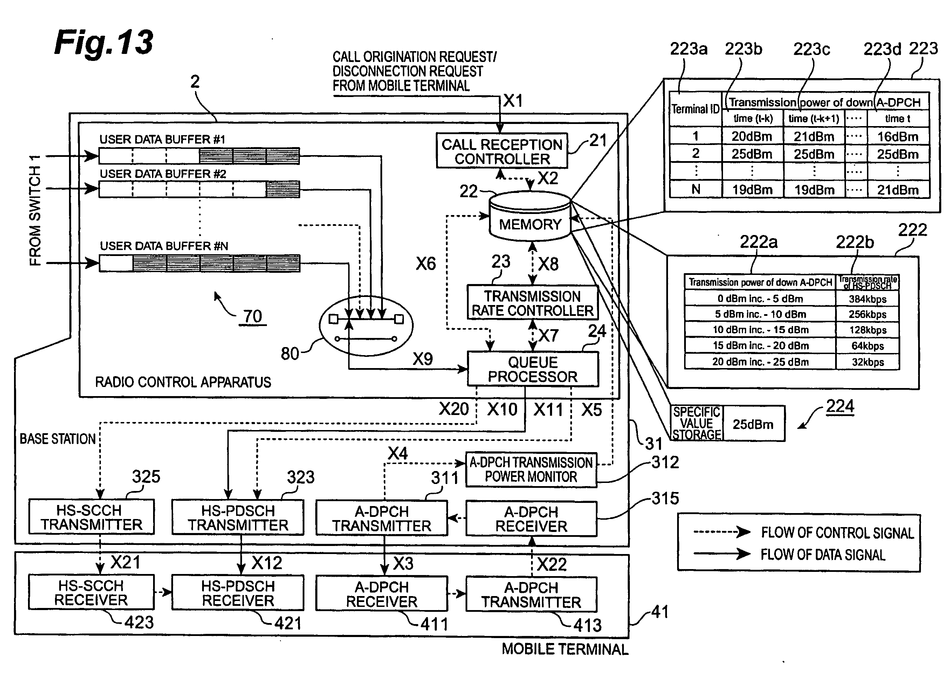

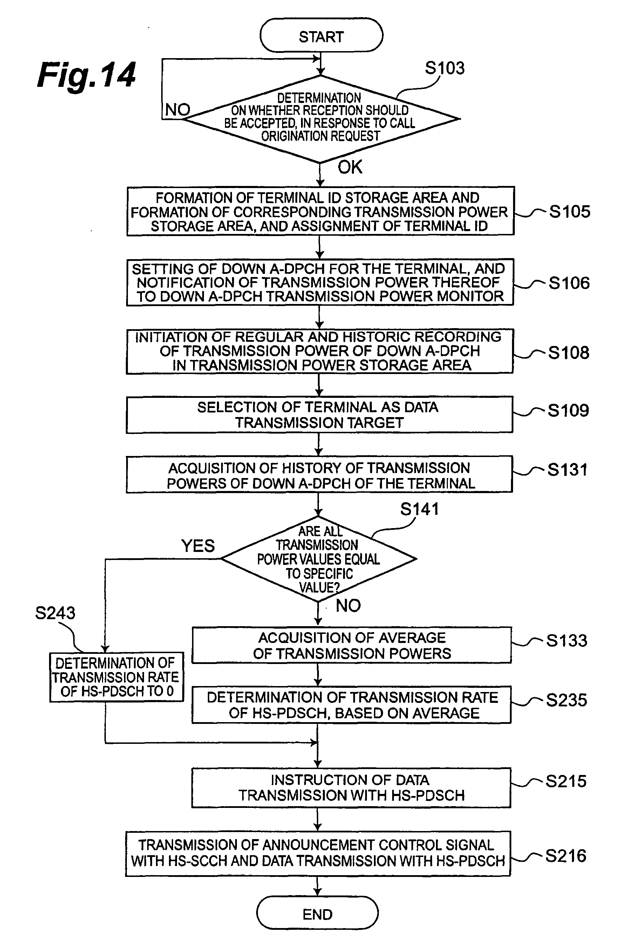

The sixth embodiment of the present invention will be described with reference to Figs. 13 and 14. Fig. 13 is a conceptual diagram for explaining the functional configuration and operation of the mobile communication system 100 in the sixth embodiment. The fundamental configuration of the mobile communication system 150 in the present embodiment is much the same as the configuration in the fifth embodiment; therefore, the same reference symbols will denote the respective components without the description thereof and differences from the fifth embodiment will be detailed below.

Namely, the fifth embodiment used the history information of the plurality of transmission powers of down A-DPCH acquired at regular intervals, in the calculation of the average of transmission powers, whereas the present embodiment is different in that the data is used in recognition of presence or absence of a secular change in the transmission power. For implementing such functionality, the radio control apparatus 2 in the present embodiment has a specific value storage 224. The specific value storage 224 stores specific value data as a criterion of judgment for uniformity of the transmission power, as shown in Fig. 13.

The transmission rate controller 23 determines whether all the history information of the predetermined number of transmission powers acquired from the transmission power storage 223 is equal to the specific value data; determines the transmission rate to 0 if all the history information is equal to the specific value data, or calculates the average of the history information as in the fifth embodiment if all the history information is not equal to the specific value data; and determines the transmission rate of HS-PDSCH using it.

The operation will be described below on the assumption that data signals are transmitted to the mobile terminal 41. The processes in X1-X6 and X9-X22 in the figure are the same as those in W1-W6 and W9-W22, respectively, detailed in the fifth embodiment, and the processes in X7-X8 will be described below.

Namely, in X8 in the figure, the transmission rate controller 23 acquires the history information of the transmission power values of down A-DPCH stored in the transmission power storage areas 223b, 223c, and 223d in the same record as the terminal ID specified in X7 (step S131). The transmission power data acquired at this time is a total of (k+1) numerical data acquired from the down A-DPCH transmission power monitor 312 in the predetermined time period (period k) in X5.

Subsequently, the transmission rate controller 23 retrieves the above specific value data (e.g., 25 dBm) from the specific value storage 224 and determines whether the specific value data agrees with the transmission power values of down A-DPCH acquired above (step S141). When the result of the determination is that all the values agree with the specific value, the transmission rate controller 23 judges that the transmission powers of down A-DPCH remain at the upper limit (i.e., the radio link condition is continuously bad), and notifies the queue processor 24 of the transmission rate of "0 kbps" (U7 and step S243) while skipping the average calculating process and the process of referring to the data in the transmission rate storage 222. On the other hand, when the result of the determination is that even only one of the data is different from the specific value, the average is calculated and thereafter the corresponding transmission rate is acquired (step S133 and step S235), as in the processes in the fifth embodiment.

For example, noting the mobile terminal having the terminal ID "2," the record in the second row inside the transmission power storage 223 shown in Fig. 13 indicates that all the transmission powers of down A-DPCH acquired by the transmission rate controller 23 are the upper limit of 25 dBm. In this case, the transmission rate controller 23 determines the transmission rate of HS-PDSCH to be "0 kbps," without reference to the data in the transmission rate storage 222, and notifies the queue processor 24 of it.

Thereafter, the queue processor 24 transfers the transmission rate "0" to the HS-PDSCH transmitter 313 of the public base station 31 in accordance with the notification of the transmission rate from the transmission rate controller 23, thereby terminating the data transmission to the mobile terminal 41 (step S215). Then the processor searches the terminal ID storage area 223a for a terminal ID of a mobile terminal as a next transmission target and repeatedly executes the processing from X6.

In the mobile communication system 150 in the present embodiment, as described above, the values of transmission powers the predetermined time period before, together with the up-to-date transmission power, are added and recorded on a history basis in the transmission power storage 223. Then the transmission rate controller 23 monitors the transition of transmission powers of the control signal and, if the transmission powers remain at the specific value over the predetermined period, the controller determines the transmission rate of data signals to 0 and stops the transmission of data signals. The fact that the transmission powers of the control signal remain at the upper limit means that the extremely bad condition of the radio link continues between the public base station 31 and the mobile terminal 41. An attempt to transmit data signals in this condition will give rise to transmission error at high probability and will be a cause to lower the throughput in the entire system. Therefore, the data transmission is temporarily stopped to the mobile terminal 41 and the data transmission is preferentially carried out to another mobile terminal in a good radio link condition, whereby the volume of data transmitted per unit time in HS-PDSCH can be increased.

### (Seventh Embodiment)

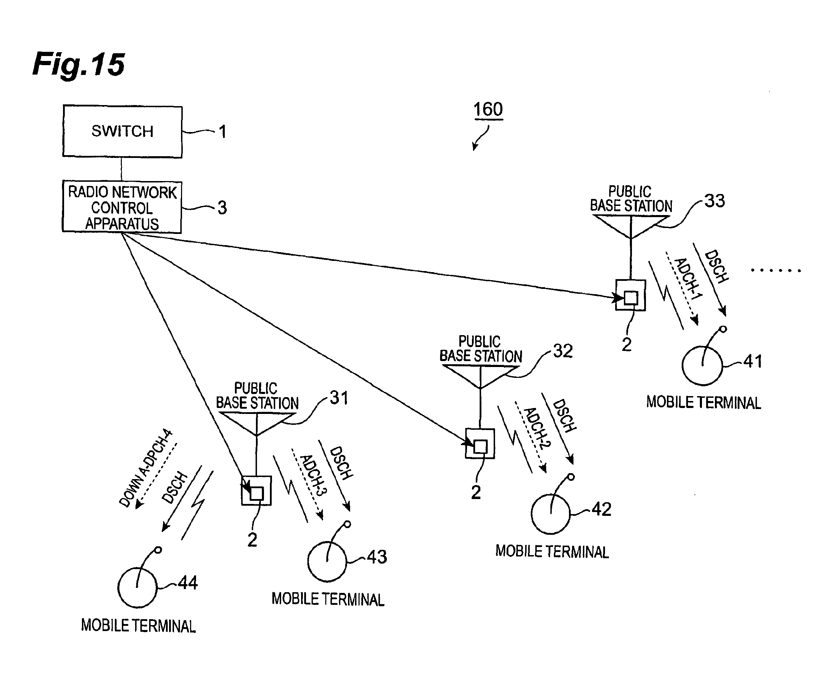

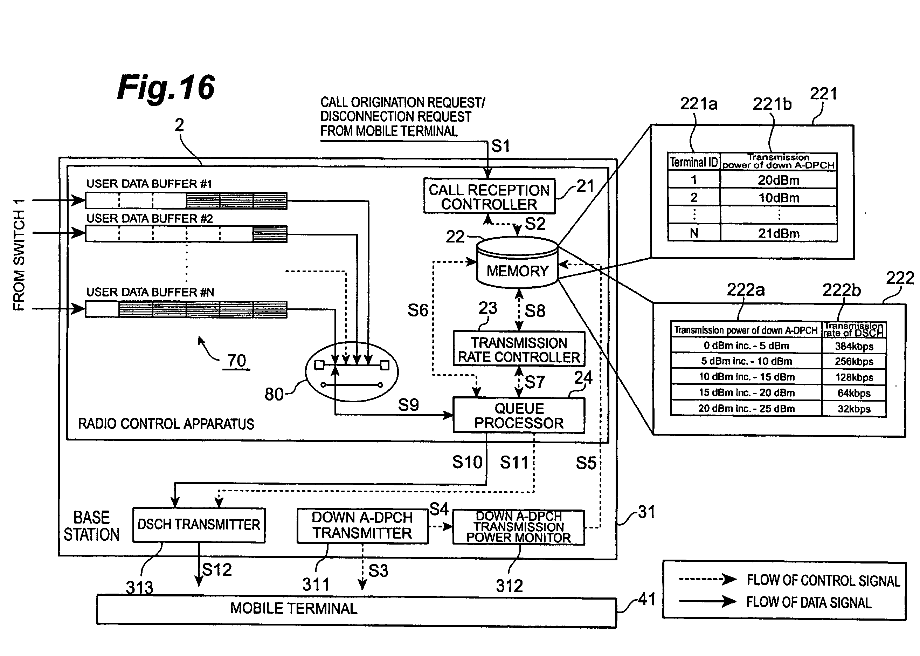

The mobile communication system 160 in the seventh embodiment of the present invention will be described below with reference to Figs. 15 and 16. As shown in Fig. 15, the mobile communication system 160 is a system capable of packet transmission of data signals to mobile terminals, and has mobile terminals 41, 42, 43, 44 carried and used by users and located in predetermined communication areas, public base stations 31, 32, 33 capable of direct radio communication with the mobile terminals 41-44, radio control apparatus 2, 2, 2 provided in the respective public base stations 31-33 and configured to totally control respective packet communication operations between the public base stations 31-33 and the mobile terminals 41-44, a switching unit 1 functioning as a relay center to an external network, and a radio network control apparatus 3 for relaying signals between the switching unit 1 and the plurality of public base stations 31-33, and the devices from the switching unit 1 to the mobile terminals 41-44 are configured to be bidirectionally communicable.

Fig. 16 is a conceptual diagram for explaining the functional configuration and operation of the public base station 31 in the mobile communication system 160 in the seventh embodiment. As shown in Fig. 16, the public base station 31 in the mobile communication system 160 in the present embodiment is different from that of the mobile communication system 100 in the first embodiment that the radio control apparatus 2 are provided in the respective public base stations 31...

The configurations of the radio control apparatus 2 and the mobile terminals 41-44 in this mobile communication system 160 are much the same as those in the first embodiment. The configurations other than the radio control apparatus 2 in the public base station 31 are also much the same as those in the first embodiment. The down A-DPCH transmitter 311 of down A-DPCH which is established for every mobile terminal 41 and the transmission power of which is controlled in a closed loop according to the link condition, corresponds to the first channel transmitting means, and the DSCH transmitter 313 for transmitting the data signals with the common channel corresponds to the second channel transmitting means.

In the mobile communication system 160 as described above, the transmission rate of data signals from the DSCH transmitter 331 is controlled by the control flow similar to that in the first embodiment, with the operational effect as in the first embodiment. Furthermore, in the present embodiment the mobile communication system 160 can execute and control the sequential processing from the acquisition of transmission power of down A-DPCH to the determination of transmission rate of DSCH and the instruction of data transmission inside the public base station 31, whereby the control of transmission rate can be carried out quickly and finely.

### (Eighth Embodiment)

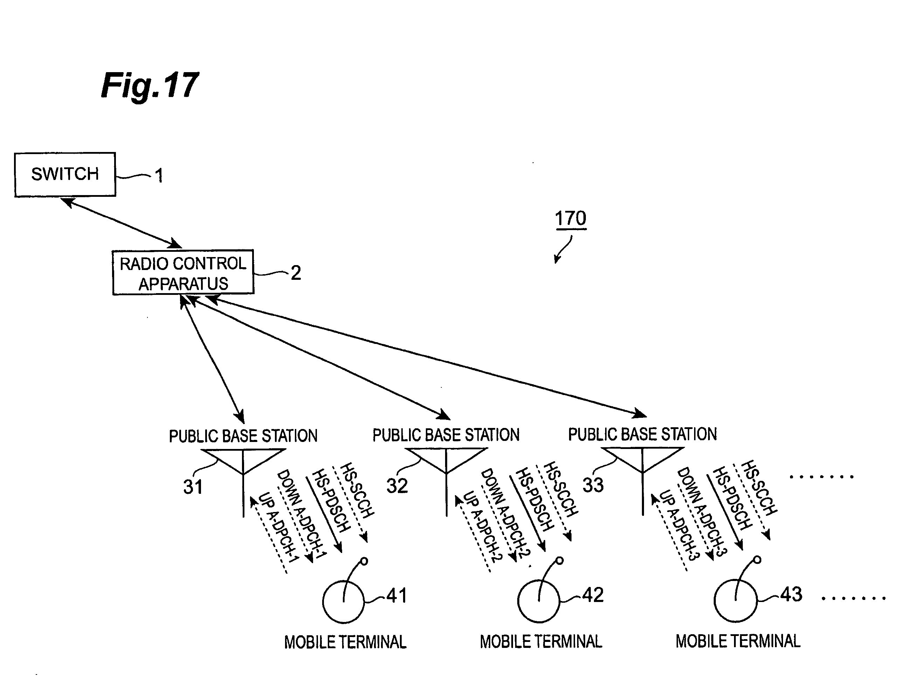

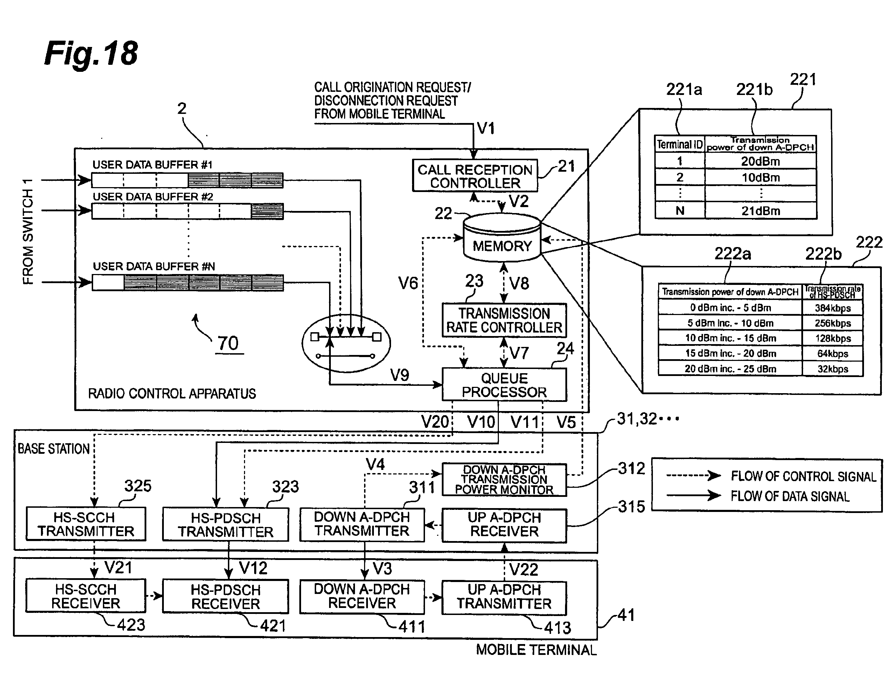

The mobile communication system 170 in the eighth embodiment of the present invention will be described below with reference to Figs. 17 and 18. Fig. 17 is a schematic diagram showing an overall configuration example of the mobile communication system 170 in the present embodiment. The mobile communication system 170 is comprised of a switching unit 1 functioning as a relay center for public base stations, a radio control apparatus 2 for totally controlling packet transmission between public base stations and mobile terminals, public base stations 31, 32, 33 configured to implement direct radio communication with mobile terminals in predetermined communication areas, and mobile terminals 41, 42, 43 carried and used by users, which are constructed in stages and which are connected so as to be bidirectionally communicable.

Fig. 18 is a conceptual diagram for explaining the functional configuration and operation of the mobile communication system 170 in the eighth embodiment. The mobile communication system 170 in the present embodiment is different in structure from that in the fourth embodiment in that the radio control apparatus 2 is placed outside the public base station 31 and is able to control the plurality of public base stations 31, 32,... The scheduling of packet transmission is conducted outside the public base station 31.

The configurations of the radio control apparatus 2 and the mobile terminals 41-43 in this mobile communication system 170 are much the same as those in the fourth embodiment. The configuration of the public base stations 31-33 is much the same as that of the public base stations 31-33 in the fourth embodiment except that they do not have the radio control apparatus 2 inside and are connected to the radio control apparatus 2 located outside to implement communication. In the mobile communication system 170 of this configuration, the transmission rate of data signals from the HS-PDSCH transmitter 323 is controlled by the control flow similar to that in the fourth embodiment, with the operational effect as in the fourth embodiment.

The forms described in the above embodiments are just preferred examples of the mobile communication systems according to the present invention, and the present invention is by no means intended to be limited to those.

For example, the second embodiment and the third embodiment were described as separate embodiments, while the fifth embodiment and the sixth embodiment as separate embodiments; however, they may be applied in combination of the embodiments. Namely, the system may be arranged so that if the average over the predetermined period of the transmission powers of the control signal, the power control signal, or the like, calculated by the transmission rate controller 23, is equal to the specific value (e.g., 25 dBm), it is estimated that the control signal maintained the specific value over the predetermined period (the link condition is extremely poor), and the transmission rate of data signals is determined to 0 kbps.

The numerical values indicating the transmission powers of A-DPCH and the transmission rates of DSCH or HS-PDSCH stored in the aforementioned memory 22 are just an example, and the point is that the correspondence is made so that the transmission rate of DSCH or HS-PDSCH can be specified on the basis of the transmission power of A-DPCH.

Furthermore, the transmission rate storage 222 may be configured so as to be manually updatable according to need, or may be configured so as to be automatically updated on a regular basis with a lapse of a fixed period. This enables fine transmission rate control according to the relationship between the transmission power of A-DPCH and the radio link condition.

In the above embodiments the mobile terminals were illustrated as cellular phones, but the mobile terminals can be any information devices equipped with the radio communication function, for example, like PDA (Personal Digital Assistance) and the like. Besides, the details of the structure and operation of the mobile communication system 100 can also be modified according to need without departing from the scope of the present invention.

In the above embodiments the transmission rate of HS-DPSCH or the like as a common channel was controlled based on the transmission power of A-DPCH, but, without having to be limited to this, the transmission rate of a common channel can be controlled, for example, based on the transmission power of an dedicated channel the transmission power of which is controlled in a closed loop.

Furthermore, the above first to third embodiments described the examples in which the transmission rate controller 23 of the radio control apparatus 2 determined the transmission rate of data signals, but the public base station 31 may be arranged to determine the transmission rate of data signals. In this case, the public base station 31 is further provided with the function of the aforementioned memory, the function of the transmission rate controller, and the function of part of the queue processor (the input/output function of the control signal). In this configuration, the mobile communication system 100 is able to execute and control the sequential processing from the acquisition of the transmission power of down A-DPCH to the determination of the transmission rate of DSCH and the instruction of the data transmission inside the public base station 31, and thus there is no need for executing the transmission and reception of the control signal between the radio control apparatus 2 and the public base station 31. Accordingly, the response of the transmission rate control can be maintained or improved, independent of the distance of the link between the radio control apparatus 2 and the public base station 31.

In the seventh embodiment the radio control apparatus 2 of the first embodiment was located in the public base station 31, but, without having to be limited to this, the radio control apparatus 2, for example, of the second embodiment or the third embodiment may be located in the public base station.

In the eighth embodiment the radio control apparatus 2 of the fourth embodiment was located outside the public base station 31, but, without having to be limited to this, the radio control apparatus 2, for example, of the fifth embodiment or the sixth embodiment can be located outside the public base station 31.

Described last are a mobile communication program according to an embodiment of the present invention, and a computer-readable recording medium (hereinafter referred to simply as a "recording medium") in which the mobile communication program is recorded. Here the recording medium is a medium that can induce change states of energy such as magnetism, light, electricity, or the like according to description contents of a program against a reading device installed as one of hardware resources in general-purpose computers and the like and that can transmit the description contents of the program to the reading device in a format of signals corresponding to the change states. Such recording media include, for example, those detachably mounted on computers like magnetic disks, optical disks, and magnetooptical disks, nonvolatile semiconductor memories such as HDs (Hard Disks) fixedly incorporated in the computers and firmware integrally fixed, and so on.

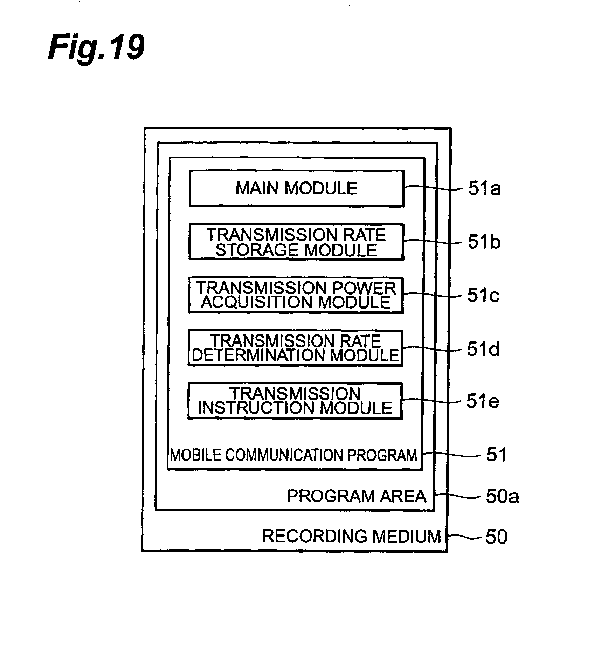

Fig. 19 is a configuration diagram of a recording medium according to an embodiment of the present invention. The recording medium 50 is provided, as shown in Fig. 19, with a program storage area 50a in which a program is recorded. A mobile communication program 51 is recorded in the program storage area 50a. The mobile communication program 51 is a program for controlling downward packet transmission between mobile terminals and public base stations, and, as shown in Fig. 15, is comprised of a main module 51a for totally controlling processing; a transmission rate storage module 51b for letting the computer execute a process of storing transmission rates of data signals in correspondence to transmission powers of control signals; a transmission power acquisition module 51c for letting the computer execute a process of acquiring a transmission power of a control signal transmitted to a specific mobile terminal among a plurality of mobile terminals; a transmission rate determination module 51d for letting the computer execute a process of determining a transmission rate of a data signal to be transmitted to the specific mobile terminal, on the basis of the transmission rates of the data signals stored and the transmission power of the control signal acquired; and a transmission instruction module 51e for letting the computer execute a process of instructing a public base station to transmit the data signal at the transmission rate of the data signal thus determined.

This mobile communication program 51 may also be configured as follows: the transmission rate storage module 51b is arranged to let the computer execute a process of storing transmission rates of data signals in correspondence to transmission powers of A-DPCH; the transmission power acquisition module 51c is arranged to let the computer execute a process of acquiring a transmission power of an A-DPCH transmitted to a specific mobile terminal among a plurality of mobile terminals; the transmission rate determination module 51d is arranged to let the computer execute a process of determining a transmission rate of a data signal to be transmitted to the specific mobile terminal, on the basis of the transmission rates of the data signals stored and the transmission power of A-DPCH acquired; the transmission instruction module 51e is arranged to let the computer execute a process of giving an instruction to perform transmission of the data signal at the transmission rate of the data signal thus determined.

Here the transmission rate storage module 51b is a module for performing the process of storing in such a storage means as an HD, a memory, or the like, data similar to the data stored in the transmission rate storage 222 of the radio control apparatus 2, and the functionality implemented by operating each of the transmission power acquisition module 51c, the transmission rate determination module 51d, and the transmission instruction module 51e is similar to the function of the transmission rate controller 23 of the radio control apparatus 2.

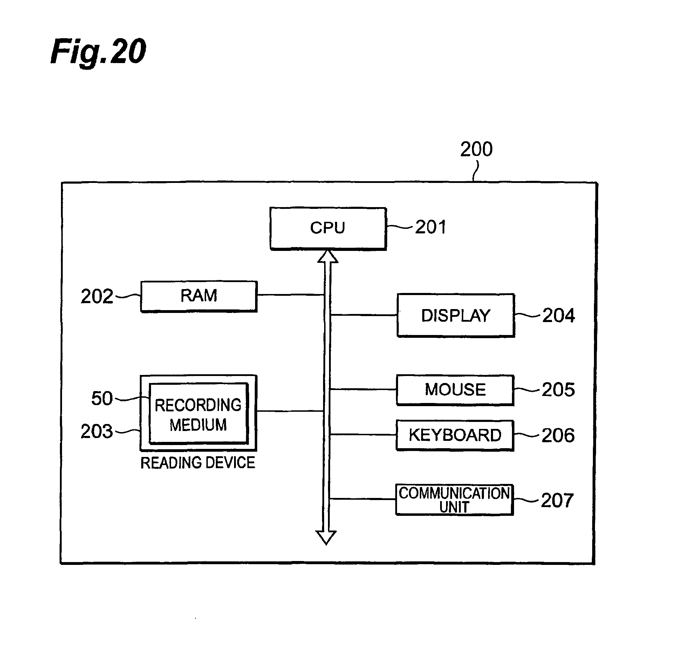

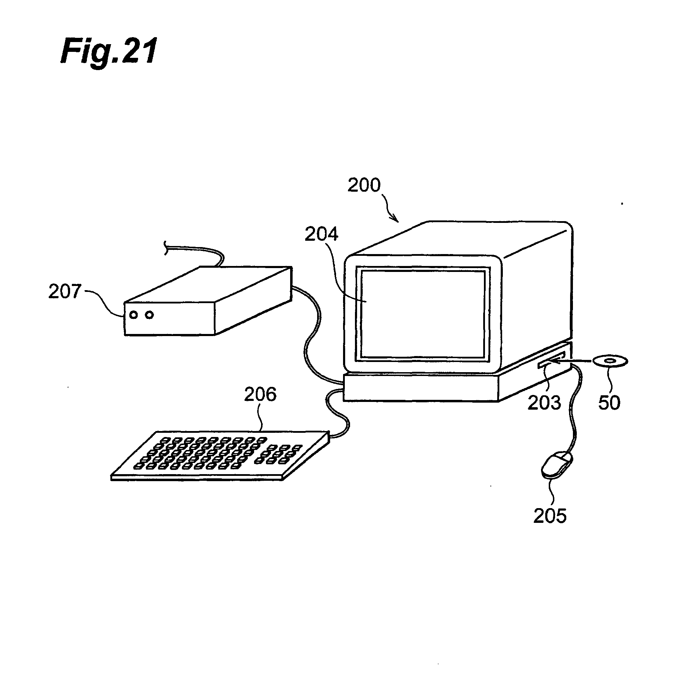

Fig. 20 is a block diagram showing a configuration of a computer (e.g., a server system) for executing the mobile communication program 51 recorded in the recording medium 50. Fig. 21 is a schematic perspective view of the computer for executing the mobile communication program 51 recorded in the recording medium 50. The computer 200 is comprised, as shown in Figs. 20 and 21, of a reading device 203, a RAM (Random Access Memory) 202 being a volatile semiconductor memory in which an OS (Operating System) is resident, a display 204 as a display means, a mouse 205 and a keyboard 206 as input means, a communication unit 207 as a communication means, and a CPU 201 for controlling execution of the mobile communication program 51 and others. When the recording medium 50 is inserted into the reading device 203, the information recorded in the recording medium 50 becomes accessible to the reading device 203 and the mobile communication program 51 recorded in the program storage area 50a of the recording medium 50 becomes executable by the computer 200.

The mobile communication program 51 may be configured so that part or the whole thereof is transmitted from another device through a transmission medium such as a communication line or the like to be received by the communication unit 207 and recorded. Conversely, the mobile communication program 51 may also be configured to be transmitted through the transmission medium to be installed in another device.

### Industrial Applicability

The present invention has realized the fast transmission while maintaining the communication quality of data signals because of the dynamic control on the transmission rates of data signals transmitted in time division with the common channel to the plurality of mobile terminals according to the transmission powers of signals transmitted with the dedicated channels for the respective mobile terminals. This decreased the retransmission rate due to transmission error and the interference in the other radio links and, as a result, increased the volume of data transmitted per unit time.

## Claims

1. A radio control apparatus for controlling downlink packet communication between mobile terminals and a base station by transmitting control signals with dedicated channels for the respective mobile terminals and by transmitting data signals with a common channel used in a time-shared manner among the mobile terminals, said radio control apparatus comprising:
storage means for storing transmission rates of the data signals in correspondence to transmission powers of the control signals;
acquiring means for acquiring a transmission power of a control signal transmitted to a specific mobile terminal among the mobile terminals;
determining means for determining a transmission rate of a data signal to be transmitted to said specific mobile terminal, on the basis of the transmission power of the control signal acquired by the acquiring means and with reference to information stored in the storage means; and
instructing means for instructing the base station to transmit the data signal at the transmission rate of the data signal determined by the determining means.

2. The radio control apparatus according to Claim 1, wherein the storage means stores the transmission rates of the data signals so as to decrease the transmission rates of the data signals with increase in the transmission powers of the control signals and so as to increase the transmission rates of the data signals with decrease in the transmission powers of the control signals.

3. The radio control apparatus according to Claim 2, further comprising calculating means for calculating an average over a predetermined time period of transmission powers of the control signal transmitted to said specific mobile terminal,
wherein the determining means determines the transmission rate of the data signal to be transmitted to said specific mobile terminal, on the basis of the average calculated by the calculating means and with reference to the information stored in the storage means.

4. The radio control apparatus according to one of Claims 1 to 3, wherein the acquiring means acquires transmission powers of the control signal transmitted to said specific mobile terminal, at regular intervals over a predetermined time period, and
wherein when the transmission powers of the control signal acquired by the acquiring means remain at a specific value over the predetermined time period, the determining means determines the transmission rate of the data signal to be transmitted to the specific mobile terminal, to 0.

5. A radio control apparatus for controlling a base station configured to transmit each of first signals to a plurality of mobile terminals with dedicated channels for the respective mobile terminals while controlling each of transmission powers of the dedicated channels according to link conditions of the channels, and to transmit data signals to the mobile terminals with a common channel used in a time-shared manner among the mobile terminals, said radio control apparatus comprising:
acquiring means for acquiring a transmission power of a first signal transmitted from the base station to a specific mobile terminal among the mobile terminals;
storage means for storing a correspondence between transmission rates of the data signals and transmission powers of the first signals;
determining means for determining a transmission rate of the data signal to be transmitted to said specific mobile terminal, on the basis of the transmission power of the first signal acquired by the acquiring means and with reference to the correspondence stored in the storage means; and
instructing means for instructing the base station to perform transmission of the data signal to the specific mobile terminal on the basis of the transmission rate determined by the determining means.

6. A base station comprising:
first channel transmitting means for transmitting each of first signals to a plurality of mobile terminals with dedicated channels for the respective mobile terminals while controlling transmission powers of the first signals according to link conditions of the channels;
second channel transmitting means for transmitting data signals to the mobile terminals with a common channel used in a time-shared manner among the mobile terminals;
acquiring means for acquiring a transmission power of a first signal transmitted to a specific mobile terminal among the mobile terminals by the first channel transmitting means;
storage means for storing a correspondence between transmission rates of the data signals and transmission powers of the first signals;
determining means for determining a transmission rate of the data signal to be transmitted to the specific mobile terminal, on the basis of the transmission power of the first signal acquired by the acquiring means and with reference to the correspondence stored in the storage means; and
instructing means for instructing the second channel transmitting means to perform transmission of the data signal to the specific mobile terminal on the basis of the transmission rate determined by the determining means.

7. The base station according to Claim 6, wherein said storage means stores the correspondence so as to decrease the transmission rates of the data signals with increase in the transmission powers of the first signals and so as to increase the transmission rates of the data signals with decrease in the transmission powers of the first signals.

8. The base station according to Claim 6 or 7, wherein said acquiring means acquires each of transmission powers of first signals transmitted at mutually different times to the specific mobile terminal by the first channel transmitting means,
said base station further comprising calculating means for calculating an average of the transmission powers of the first signals,
wherein the determining means determines the transmission rate of the data signal to be transmitted to the specific mobile terminal, on the basis of the average calculated by the calculating means and with reference to the correspondence stored in the storage means.

9. The base station according to one of Claims 6 to 8, wherein the acquiring means acquires each of transmission powers of first signals transmitted at mutually different times to the specific mobile terminal by the first channel transmitting means, and
wherein when the transmission powers of the first signals acquired by the acquiring means remain at a specific value over a predetermined time period, the determining means determines the transmission rate of the data signal to be transmitted to the specific mobile terminal, to 0.

10. A base station comprising:
first channel transmitting means for transmitting control signals with dedicated channels for respective mobile terminals;
second channel transmitting means for transmitting data signals with a common channel used in a time-shared manner among the mobile terminals;
storage means for storing transmission rates of the data signals transmitted from the second channel transmitting means, in correspondence to transmission powers of the control signals;
acquiring means for acquiring a transmission power of a control signal transmitted to a specific mobile terminal among the mobile terminals;
determining means for determining a transmission rate of a data signal to be transmitted to the specific mobile terminal, on the basis of the transmission power of the control signal acquired by the acquiring means and with reference to information stored in the storage means; and
instructing means for instructing the second channel transmitting means to transmit the data signal at the transmission rate of the data signal determined by the determining means.

11. A mobile communication method of performing downlink packet communication between mobile terminals and a base station by transmitting control signals with dedicated channels for the respective mobile terminals and by transmitting data signals with a common channel used in a time-shared manner among the mobile terminals, said mobile communication method comprising:
a storage step of storing transmission rates of the data signals in correspondence to transmission powers of the control signals;
an acquiring step of acquiring a transmission power of a control signal transmitted to a specific mobile terminal among the mobile terminals;
a determining step of determining a transmission rate of a data signal to be transmitted to said specific mobile terminal, on the basis of the transmission rates of the data signals stored in the storage step and the transmission power of the control signal acquired in the acquiring step; and
an instructing step of instructing the base station to transmit the data signal at the transmission rate of the data signal determined in the determining step.

12. The mobile communication method according to Claim 11, wherein the storage step is to store the transmission rates of the data signals so as to decrease the transmission rates of the data signals with increase in the transmission powers of the control signals and so as to increase the transmission rates of the data signals with decrease in the transmission powers of the control signals.

13. The mobile communication method according to Claim 12, further comprising a calculating step of calculating an average over a predetermined time period of transmission powers of the control signal transmitted to said specific mobile terminal,
wherein the determining step is to determine the transmission rate of the data signal to be transmitted to said specific mobile terminal, on the basis of the average calculated in the calculating step and with reference to the information stored in the storage step.

14. The mobile communication method according to one of Claims 11 to 13, wherein the acquiring step is to acquire transmission powers of the control signal transmitted to said specific mobile terminal, at regular intervals over a predetermined time period, and
wherein when the transmission powers of the control signal acquired in the acquiring step remain at a specific value over the predetermined time period, the determining step is to determine the transmission rate of the data signal to be transmitted to the specific mobile terminal, to 0.

15. A mobile communication method of performing mobile communication while controlling a base station comprising: first channel transmitting means for transmitting each of first signals to a plurality of mobile terminals with dedicated channels for the respective mobile terminals while controlling each of transmission powers of the first signals according to link conditions of the channels; and second channel transmitting means for transmitting data signals to the mobile terminals with a common channel used in a time-shared manner among the mobile terminals, said mobile communication method comprising:
an acquiring step of acquiring a transmission power of a first signal transmitted to a specific mobile terminal among the mobile terminals by the first channel transmitting means;
a storage step of storing a correspondence between transmission rates of the data signals and transmission powers of the first signals;
a determining step of determining a transmission rate of the data signal to be transmitted to the specific mobile terminal, on the basis of the transmission power of the first signal acquired in the acquiring step and with reference to the correspondence stored in the storage step; and
an instructing step of instructing the second channel transmitting means to perform transmission of the data signal to the specific mobile terminal on the basis of the transmission rate determined in the determining step.

16. The mobile communication method according to Claim 15, wherein the storage step is to store the correspondence so as to decrease the transmission rates of the data signals with increase in the transmission powers of the first signals and so as to increase the transmission rates of the data signals with decrease in the transmission powers of the first signals.

17. The mobile communication method according to Claim 15 or 16, wherein said acquiring step is to acquire each of transmission powers of first signals transmitted at mutually different times to the specific mobile terminal by the first channel transmitting means,
said mobile communication method further comprising a calculating step of calculating an average of the transmission powers of the first signals acquired,
wherein the determining step is to determine the transmission rate of the data signal to be transmitted to the specific mobile terminal, on the basis of the average calculated in the calculating step and with reference to the correspondence stored in the storage step.

18. The mobile communication method according to one of Claims 15 to 17, wherein the acquiring means acquires each of transmission powers of first signals transmitted at mutually different times to the specific mobile terminal by the first channel transmitting means, and
wherein when the transmission powers of the first signals acquired in the acquiring step remain at a specific value over a predetermined time period, the determining step is to determine the transmission rate of the data signal to be transmitted to the specific mobile terminal, to 0.

19. A mobile communication program which can be read by a computer for controlling downlink packet communication between mobile terminals and a base station by transmitting control signals with dedicated channels for the respective mobile terminals and by transmitting data signals with a common channel used in a time-shared manner among the mobile terminals, said mobile communication program letting the computer execute:
a storage process of storing transmission rates of the data signals in correspondence to transmission powers of the control signals;
an acquiring process of acquiring a transmission power of a control signal transmitted to a specific mobile terminal among the mobile terminals;
a determining process of determining a transmission rate of a data signal to be transmitted to said specific mobile terminal, on the basis of the transmission rates of the data signals stored in the storage process and the transmission power of the control signal acquired in the acquiring process; and
an instructing process of instructing the base station to transmit the data signal at the transmission rate of the data signal determined in the determining process.

20. The mobile communication program according to Claim 19, wherein the storage process is to store the transmission rates of the data signals so as to decrease the transmission rates of the data signals with increase in the transmission powers of the control signals and so as to increase the transmission rates of the data signals with decrease in the transmission powers of the control signals.

21. The mobile communication program according to Claim 20, letting the computer further execute a calculating process of calculating an average over a predetermined time period of transmission powers of the control signal transmitted to said specific mobile terminal,
wherein the determining process is to determine the transmission rate of the data signal to be transmitted to said specific mobile terminal, on the basis of the average calculated by the calculating means and with reference to information stored in the storage process.

22. The mobile communication program according to one of Claims 19 to 21, wherein the acquiring process is to acquire transmission powers of the control signal transmitted to said specific mobile terminal, at regular intervals over a predetermined time period, and
wherein when the transmission powers of the control signal acquired in the acquiring process remain at a specific value over the predetermined time period, the determining process is to determine the transmission rate of the data signal to be transmitted to the specific mobile terminal, to 0.

23. A mobile communication program of controlling a base station comprising: first channel transmitting means for transmitting each of first signals to a plurality of mobile terminals with dedicated channels for the respective mobile terminals while controlling each of transmission powers of the first signals according to link conditions of the channels; and second channel transmitting means for transmitting data signals to the mobile terminals with a common channel used in a time-shared manner among the mobile terminals, said mobile communication program letting a computer execute:
an acquiring process of acquiring a transmission power of a first signal transmitted to a specific mobile terminal among the plurality of mobile terminals by the first channel transmitting means;
a storage process of storing a correspondence between transmission rates of the data signals and transmission powers of the first signals;
a determining process of determining a transmission rate of the data signal to be transmitted to the specific mobile terminal, on the basis of the transmission power of the first signal acquired in the acquiring process and with reference to the correspondence stored in the storage process; and
an instructing process of instructing the second channel transmitting process to perform transmission of the data signal to the specific mobile terminal on the basis of the transmission rate determined in the determining process.

24. The mobile communication program according to Claim 23, wherein the storage process is to store the correspondence so as to decrease the transmission rates of the data signals with increase in the transmission powers of the first signals and so as to increase the transmission rates of the data signals with decrease in the transmission powers of the first signals.

25. The mobile communication program according to Claim 23 or 24, wherein said acquiring process is to acquire each of transmission powers of first signals transmitted at mutually different times to the specific mobile terminal by the first channel transmitting means,
said mobile communication program further comprising a calculating process of calculating an average of the transmission powers of the first signals acquired,
wherein the determining process is to determine the transmission rate of the data signal to be transmitted to the specific mobile terminal, on the basis of the average calculated in the calculating process and with reference to the correspondence stored in the storage process.

26. The mobile communication program according to one of Claims 23 to 25, wherein the acquiring process is to acquire each of transmission powers of first signals transmitted at mutually different times to the specific mobile terminal by the first channel transmitting means, and
wherein when the transmission powers of the first signals acquired in the acquiring process remain at a specific value over a predetermined time period, the determining process is to determine the transmission rate of the data signal to be transmitted to the specific mobile terminal, to 0.

27. A recording medium in which the mobile communication program according to one of Claims 19 to 26 is recorded.

28. A mobile communication system comprising the radio control apparatus according to one of Claims 1 to 5; and a base station for transmitting a data signal to the mobile terminal at a transmission rate indicated by the instructing means of the radio control apparatus.
